# EUROPEAN PATENT APPLICATION

(11) **EP 3 467 620 A1**
(43) Date of publication of application: **10.04.2019**
(21) Application number: 17806197.4
(22) Date of filing: 12.04.2017
(51) Int. Cl.: G06F 3/01, G06F 3/0481

(54) **INFORMATION PROCESSING DEVICE, INFORMATION PROCESSING METHOD, AND PROGRAM**

(30) Priority: 31.05.2016 JP 2016108409
(71) Applicant: Sony Corporation, Tokyo 108-0075 (JP)
(72) Inventor: IMOTO, Maki, Tokyo 108-0075 (JP); IKEDA, Takuya, Tokyo 108-0075 (JP); IDA, Kentaro, Tokyo 108-0075 (JP); KAWANA, Yousuke, Tokyo 108-0075 (JP); SUZUKI, Ryuichi, Tokyo 108-0075 (JP)
(74) Representative: MFG Patentanwälte Meyer-Wildhagen Meggle-Freund Gerhard PartG mbB
(86) International application number: PCT/JP2017/014910
(87) International publication number: WO 2017/208637

(57) **Abstract**

To provide a structure capable of suppressing deterioration in manipulability in a case in which a display region and a manipulation region are different. An information processing device, an information processing method for the information processing device, and a program, the information processing device including: an input unit configured to obtain distance information changed in accordance with a distance between a manipulator recognized in a different manipulation region from a display region in which a virtual object is viewed and an input recognition region in which an input by the manipulator in the manipulation region is recognized; and an output control unit configured to control an output related to the virtual object on a basis of the distance information.

## Description

### Technical Field

The present disclosure relates to an information processing device, an information processing method, and a program.

### Background Art

In recent years, with development of information processing technologies, various technologies related to an input for manipulating devices have been researched and developed. Specifically, there are technologies related to inputs in 2-dimensional spaces using touch screens or the like and there are technologies related to inputs in 3-dimensional spaces based on recognized gestures or the like of users.

Here, there are cases in which manipulations intended by users are not recognized by devices. For example, when users perform manipulations without being conscious of regions in which manipulations are recognized (hereinafter also referred to as manipulation regions), some or all of the manipulations are performed outside of the manipulation regions in some cases. In these cases, the manipulations performed outside of the manipulation regions are not recognized by devices. As a result, processes related to manipulations intended by users may not be performed and processes related to different manipulations from the manipulations intended by the users may be performed.

In contrast, Patent Literature 1 discloses an image processing device that displays a black image indicating a region other than a manipulation region and a captured image in which a user performing a manipulation is shown and superimposes an image for notifying the user that the user approaches a region other than the manipulation region on the black image.

### Citation List

### Patent Literature

Patent Literature 1: JP 2013-257762A

### Disclosure of Invention

### Technical Problem

However, in the technology of the related art typified in Patent Literature 1, there is concern of manipulability deteriorating in a case in which a manipulation region and a display region in which a virtual object related to a manipulation is viewed are different. For example, in a device such as the above-described touch screen, a display region and a manipulation region are matched. Therefore, a user can confirm a user manipulation while viewing the display region. However, in a device in which a gesture manipulation or the like is recognized, a display region and a manipulation region are different. Therefore, a user may not confirm a user manipulation while viewing the display region. As a result, there is concern of the user performing a manipulation erroneously.

Accordingly, the present disclosure proposes a structure capable of suppressing deterioration in manipulability in a case in which a display region and a manipulation region are different.

### Solution to Problem

According to the present disclosure, there is provided an information processing device including: an input unit configured to obtain distance information changed in accordance with a distance between a manipulator recognized in a different manipulation region from a display region in which a virtual object is viewed and an input recognition region in which an input by the manipulator in the manipulation region is recognized; and an output control unit configured to control an output related to the virtual object on a basis of the distance information.

In addition, according to the present disclosure, there is provided an information processing method including, by a processor: obtaining distance information changed in accordance with a distance between a manipulator recognized in a different manipulation region from a display region in which a virtual object is viewed and an input recognition region in which an input by the manipulator in the manipulation region is recognized; and controlling an output related to the virtual object on a basis of the distance information.

In addition, according to the present disclosure, there is provided a program causing a computer to realize: an input function of obtaining distance information changed in accordance with a distance between a manipulator recognized in a different manipulation region from a display region in which a virtual object is viewed and an input recognition region in which an input by the manipulator in the manipulation region is recognized; and an output control function of controlling an output related to the virtual object on a basis of the distance information.

### Advantageous Effects of Invention

According to the present disclosure, as described above, it is possible to provide a structure capable of suppressing deterioration in manipulability in a case in which a display region and a manipulation region are different. Note that the effects described above are not necessarily limitative. With or in the place of the above effects, there may be achieved any one of the effects described in this specification or other effects that may be grasped from this specification.

### Brief Description of Drawings

FIG. 1 is a diagram illustrating a configuration example of an information processing system according to an embodiment of the present disclosure.
FIG. 2 is a block diagram conceptually illustrating an example of a functional configuration of an information processing device according to the embodiment of the present disclosure.
FIG. 3 is a diagram illustrating an example of an input recognition region in the information processing system according to the embodiment of the present disclosure.
FIG. 4 is a diagram illustrating an example of an input recognition region in the information processing system according to the embodiment of the present disclosure.
FIG. 5 is a diagram illustrating an example of an input recognition region in the information processing system according to the embodiment of the present disclosure.
FIG. 6 is a diagram illustrating an example of an input recognition region in the information processing system according to the embodiment of the present disclosure.
FIG. 7 is a diagram illustrating an example of a first pattern of display control of a first FB image in the information processing device according to the embodiment of the present disclosure.
FIG. 8 is a diagram illustrating an example of a first pattern of display control of a first FB image in the information processing device according to the embodiment of the present disclosure.
FIG. 9 is a diagram illustrating an example of a first pattern of display control of a first FB image in the information processing device according to the embodiment of the present disclosure.
FIG. 10 is a diagram illustrating an example of a first pattern of display control of a first FB image in the information processing device according to the embodiment of the present disclosure.
FIG. 11 is a diagram illustrating an example of a first pattern of display control of a first FB image in the information processing device according to the embodiment of the present disclosure.
FIG. 12 is a diagram illustrating an example of a first pattern of display control of a first FB image in the information processing device according to the embodiment of the present disclosure.
FIG. 13 is a diagram illustrating an example of display control of the first FB image based on manipulation target information in the information processing device according to the embodiment of the present disclosure.
FIG. 14 is a diagram illustrating an example of display control of a second FB image in the information processing device according to the embodiment of the present disclosure.
FIG. 15 is a flowchart conceptually illustrating an example of a process of the information processing device according to the embodiment of the present disclosure.
FIG. 16 is a diagram illustrating an example of a seventh pattern of the display control of the first FB image in the information processing device according to a first modification example of the embodiment of the present disclosure.
FIG. 17 is a diagram illustrating an example of an eighth pattern of the display control of the first FB image in the information processing device according to a first modification example of the embodiment of the present disclosure.
FIG. 18 is a diagram illustrating an example of a ninth pattern of the display control of the first FB image in the information processing device according to a first modification example of the embodiment of the present disclosure.
FIG. 19 is a diagram illustrating an example of a tenth pattern of the display control of the first FB image in the information processing device according to a first modification example of the embodiment of the present disclosure.
FIG. 20 is a diagram illustrating an example of an eleventh pattern of the display control of the first FB image in the information processing device according to a first modification example of the embodiment of the present disclosure.
FIG. 21 is a diagram illustrating an example of display control of the first FB image based on manipulation target information in the information processing device according to a second modification example of the embodiment of the present disclosure.
FIG. 22 is a diagram illustrating a display example of the plurality of first FB images in the information processing device according to a third modification example of the embodiment of the present disclosure.
FIG. 23 is a diagram illustrating an example of display control of the second FB image in the information processing device according to a third modification example of the embodiment of the present disclosure.
FIG. 24 is a diagram illustrating an example of display control of the first FB image in the information processing device according to a fourth modification example of the embodiment of the present disclosure.
FIG. 25 is a diagram illustrating an example of control of a first threshold of distance information in the information processing device according to a fifth modification example of the embodiment of the present disclosure.
FIG. 26 is a flowchart conceptually illustrating an example of a process to which the control of the first threshold in which manipulator information or user information is used is added in the information processing device according to the fifth modification example of the embodiment of the present disclosure.
FIG. 27 is an explanatory diagram illustrating a hardware configuration of the information processing device according to an embodiment of the present disclosure.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that the description will be made in the following order.
1. Embodiment of present disclosure
1.1. System configuration
1.2. Configuration of device
1.3. Process of device
1.4. Summary of embodiment of present disclosure
1.5. Modification examples
2. Hardware configuration of information processing device according to embodiment of present disclosure
3. Conclusion

### <1. Embodiment of present disclosure>

An information processing system according to an embodiment of the present disclosure and an information processing device realizing the information processing system will be described.

### <1.1. System configuration>

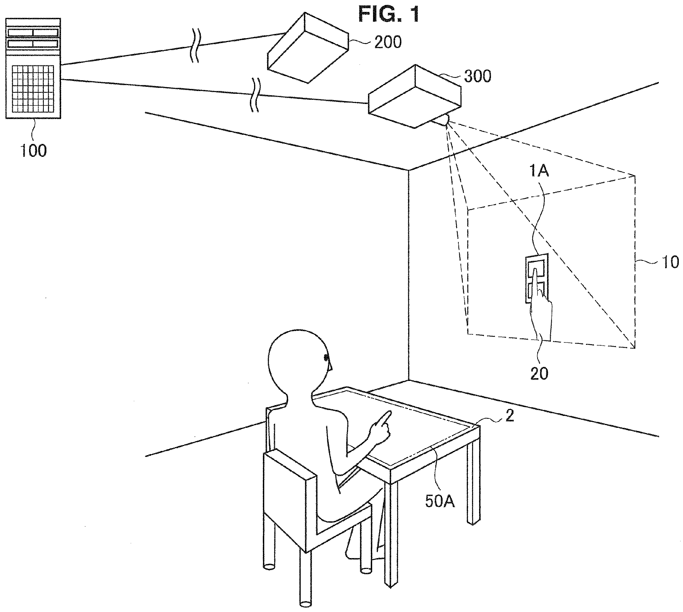

First, a configuration of the information processing system according to the embodiment of the present disclosure will be described with reference to FIG. 1. FIG. 1 is a diagram illustrating a configuration example of the information processing system according to the embodiment of the present disclosure.

As illustrated in FIG. 1, the information processing system includes an information processing device 100, a measurement device 200, and a projection device 300. The information processing device 100, the measurement device 200, and the projection device 300 communicate with each other.

The information processing device 100 controls projection of the projection device 300 using a measurement result of the measurement device 200. Specifically, the information processing device 100 recognizes a part of the body of a user serving as a manipulator from the measurement result supplied from the measurement device 200. Then, the information processing device 100 controls an aspect of the projection by the projection device 300 on the basis of a positional relation between the recognized part of the body and a region in which an input by the manipulator is recognized in a manipulation region (hereinafter also referred to as an input recognition region). For example, the information processing device 100 controls a projection position or the like of a virtual object 20 which the projection device 300 is caused to project on the basis of a position of a hand of the user measured by the measurement device 200 and a position of an input recognition region 50A. Note that the manipulation region corresponds to a measurement range of the measurement device 200. The details of the information processing device 100 will be described below.

The measurement device 200 measures a surrounding situation of the measurement device 200. Specifically, the measurement device 200 measures a phenomenon in which a position or a state of an object near the measurement device 200, for example, a user, a manipulator, or the like, is grasped. Then, the measurement device 200 supplies information obtained through the measurement (hereinafter also referred to as measurement information) to the information processing device 100 as a measurement result. For example, the measurement device 200 is a depth sensor and can measure a positional relation between a part of the body (for example, a hand) on which a marker is mounted and a nearby object (that is, positions of the part of the body and the nearby object in a 3-dimensional space) by mounting the marker on the part of the body of the user. The measurement information may be 3-dimensional image information. Note that the measurement device 200 may be an inertial sensor mounted on the user or a ring type or wristband type wearable device that includes the inertial sensor. In addition, the measurement device 200 may be installed in any way as long as the manipulation region can be ensured. For example, the measurement device 200 may be provided on a table of which an upper surface illustrated in FIG. 1 is the input recognition region 50A.

The projection device 300 projects an image on the basis of instruction information of the information processing device 100. Specifically, the projection device 300 projects the image supplied from the information processing device 100 to an instructed place. For example, the projection device 300 projects the virtual object 20 to the projection region 10 illustrated in FIG. 1 as instructed by the information processing device 100. Note that in FIG. 1, the projection device 300 is indicated as an example of a 2-dimensional (2D) projector, but the projection device 300 may be a 3D projector. In addition, an actual object may be located in the projection region 10. For example, in the example of FIG. 1, a switch 1A is located in the projection region 10 as an actual object.

As illustrated in FIG. 1, in the information processing system according to the embodiment of the present disclosure, the manipulation region including the input recognition region 50A and the projection region 10 (that is, a display region) to which the virtual object 20 or the like is projected are each located at different places.

On the other hand, in the related art, there is a technology in which a manipulation region and a display region are coincident with each other. For example, in a device such as a smartphone or a tablet terminal that includes a touch screen, a display screen corresponding to a display region and an input unit corresponding to a manipulation region are integrated. In addition, in a device that receives a manipulation input when a user touches a graphical user interface (GUI) projected to a wall surface or the like, the GUI corresponding to a display region and a region corresponding to a manipulation region are coincident with each other. Therefore, when a manipulator enters a field of view of a user viewing a display screen, the user can confirm a manipulation performed by the user while viewing the display screen. Accordingly, the user can intuitively perform a manipulation.

In the related art, however, in a case in which a manipulation region and a display region are each located at different places, there is concern of manipulability deteriorating. For example, as illustrated in FIG. 1, in a case in which a virtual object related to a manipulation in the projection region 10 is projected to a wall surface or the like and the manipulation is performed in the manipulation region on the table, a manipulator does not enter a field of view of the user viewing the projection region 10. Therefore, it is difficult for the user to confirm the manipulation performed by the user while viewing the projection region 10. Thus, the user performs the manipulation while confirming the degree of influence of the user manipulation on a display, and thus may not intuitively perform a manipulation. That is, the user has to learn information regarding a manipulation such as a manipulation region, an input recognition region, or the degree of influence of a manipulation on a display.

Accordingly, the present disclosure proposes the information processing system capable of suppressing deterioration in manipulability in a case in which a display region and a manipulation region are different and the information processing device 100 that realizes the information processing system.

### <1.2. Configuration of device>

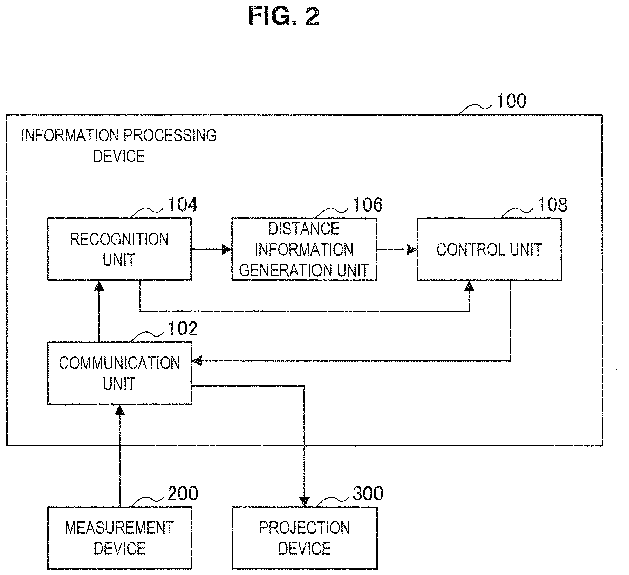

Next, a configuration of the information processing device 100 according to an embodiment of the present disclosure will be described with reference to FIG. 2. FIG. 2 is a block diagram conceptually illustrating an example of a functional configuration of the information processing device 100 according to the embodiment of the present disclosure.

As illustrated in FIG. 2, the information processing device 100 includes a communication unit 102, a recognition unit 104, a distance information generation unit 106, and a control unit 108.

### (Communication unit)

The communication unit 102 communicates with an external device of the information processing device 100. Specifically, the communication unit 102 receives a measurement result from the measurement device 200 and transmits projection instruction information to the projection device 300. For example, the communication unit 102 communicates with the measurement device 200 and the projection device 300 in conformity with a wired communication scheme. Note that the communication unit 102 may communicate in conformity with a wireless communication scheme.

### (Recognition unit)

The recognition unit 104 performs a recognition process on the basis of the measurement result of the measurement device 200. Specifically, the recognition unit 104 recognizes a manipulator on the basis of the measurement information received from the measurement device 200. As a manipulator, there is a part of the body of the user. For example, the recognition unit 104 recognizes a finger, a hand, or the like of the user on the basis of 3-dimensional image information obtained from the measurement device 200. Note that a manipulator recognized by the recognition unit 104 may be a manipulation device such as a pen type or a stick type manipulation device.

Further, the recognition unit 104 recognizes a position of the manipulator. Specifically, the recognition unit 104 recognizes the position of the manipulator in a manipulation region in which the manipulator is recognized. For example, the recognition unit 104 recognizes the position of the manipulator in a 3-dimensional space of the manipulation region on the basis of a distance between the measurement device 200 and the manipulator measured by the measurement device 200. Note that the recognition unit 104 may recognize the position of the manipulator on the basis of a size of the recognized manipulator.

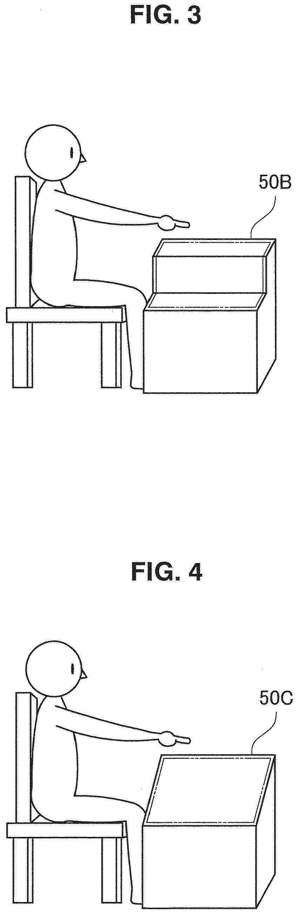

In addition, the recognition unit 104 recognizes a manipulation region. Specifically, the recognition unit 104 recognizes the manipulation region and an input recognition region included in the manipulation region on the basis of the measurement result of the measurement device 200. For example, the manipulation region and the input recognition region correspond to an object, and thus the recognition unit 104 recognizes the manipulation region and the input recognition region by recognizing the object. In the example of FIG. 1, the table 2 corresponds to the manipulation region and the manipulation region is a predetermined region for which the table 2 serves as a reference. In addition, an upper surface of the table 2 corresponds to the input recognition region 50A, and the input recognition region 50A is at least a partial region of the upper surface of the table 2. Accordingly, the recognition unit 104 recognizes the positions of the manipulation region and the input recognition region 50A by recognizing the position of the table 2. Further, the input recognition region will be described in detail with reference to FIGS. 3 to 6. FIGS. 3 to 6 are diagrams illustrating examples of input recognition regions in the information processing system according to the embodiment of the present disclosure.

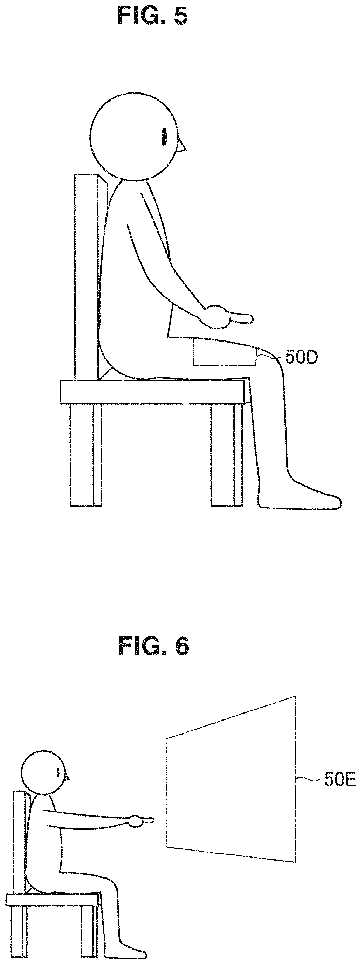

The input recognition region corresponds to the object, as described above. The input recognition region is not limited to a flat surface such as the upper surface of the table 2 illustrated in FIG. 1 and any of various shapes may be used. For example, as the input recognition region, there is an input recognition region 50B corresponding to a surface with a stepped shape illustrated in FIG. 3 or an input recognition region 50C corresponding to an inclined surface illustrated in FIG. 4. In addition, the object corresponding to the input recognition region may be a part of the body of the user. For example, as the input recognition region, there is an input recognition region 50D corresponding to a portion near a knee of the user illustrated in FIG. 5. Of course, a part other than the knee may correspond to the input recognition region. In addition, the input recognition region may not correspond to an object, but may correspond to a position in a space. For example, as the input recognition region, there is an input recognition region 50E corresponding to a predetermined position in a space which is in front of the user illustrated in FIG. 6 and is reached by a hand of the user.

In addition, the recognition unit 104 recognizes a manipulation target of a manipulator. Specifically, the recognition unit 104 recognizes a manipulation target which is an actual object in a display region. For example, the recognition unit 104 recognizes the switch 1A which is in the projection region 10, as illustrated in FIG. 1, as a manipulation target.

### (Distance information generation unit)

The distance information generation unit 106 serves as an input unit and generates distance information changed in accordance with a distance between a manipulator and an input recognition region. Specifically, the distance information generation unit 106 calculates the distance between the manipulator and the input recognition region on the basis of a recognition result of the recognition unit 104. For example, the distance information generation unit 106 calculates a distance between a position of the recognized manipulator and a position of the input recognition region in a 3-dimensional space. Then, the distance information indicating the calculated distance is supplied to the control unit 108. Note that the distance information may be an index or the like corresponding to the distance between the manipulator and the input recognition region in addition to the above-described calculated value. In addition, the distance information may be information regarding a distance between the manipulator and the input recognition region in a specific direction. For example, the distance information may be information regarding a distance between the manipulator and the input recognition region in a depth direction for the user.

### (Control unit)

The control unit 108 generally controls a process of the information processing device 100. Specifically, the control unit 108 serves as an output control unit and controls an output related to a virtual object on the basis of the distance information. More specifically the control unit 108 controls display of at least one first virtual object (hereinafter also referred to as a first feedback image or a first FB image) viewed in the display region on the basis of the distance information.

### (1. Control of display or non-display of first FB image before input recognition)

First, the control unit 108 controls display or non-display of the first FB image on the basis of the distance information and a threshold of the distance information. Specifically, in a case in which a value of the distance information is equal to or less than a first threshold determined in advance, the control unit 108 causes the projection device 300 to project the first FB image when the first FB image has not been projected. The control unit 108 causes the projection device 300 to continue the projection of the first FB image when the first FB image is being projected. Conversely, in a case in which the value of the distance information greater than a first threshold determined in advance, the control unit 108 causes the projection device 300 to stop projecting the first FB image when the first FB image is being projected, and causes the projection device 300 not to project the first FB image when the first FB image is not projected. In addition, the display position of the first FB image is a position on the display region corresponding to the position of the manipulator with regard to the manipulation region.

In addition, in a case in which the distance between the manipulator and the input recognition region is equal to or less than a second threshold, the control unit 108 may cause the projection device 300 to stop the projection of the first FB image. For example, the second threshold is a value of the distance between the manipulator and the input recognition region which is 0 or is considered to be 0. When the value of the distance information is equal to or less than the second threshold, the control unit 108 causes the projection device 300 to stop the projection of the first FB image. That is, when the manipulator reaches the input recognition region, the first FB image vanishes.

Note that display and non-display of the first FB image may be switched while the display is changed for a predetermined time. For example, the control unit 108 performs control such that transparency of the first FB image decreases over time when the first FB image is projected. In addition, the control unit 108 performs control such that the transparency of the first FB image increases over time when the projection of the first FB image is stopped. In addition, the change in the display is not limited to the change in the transparency. Gradation, hue, saturation, brightness, luminance, or the like may be changed or the first FB image may be partially be deleted for the change. In addition, the change or non-change in the display may be switched in accordance with a setting set by the user.

### (2. Control of display aspect of first FB image based on distance information)

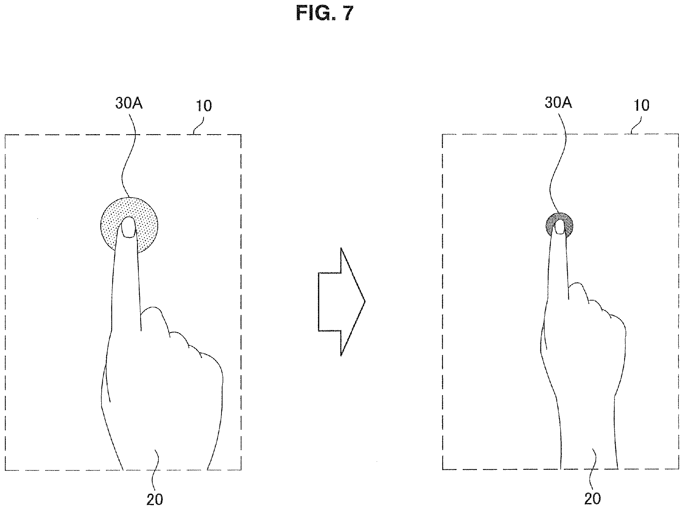

The control unit 108 controls a display aspect of the first FB image on the basis of the distance information. Here, the display of the first FB image is controlled in various patterns. Hereinafter, display control patterns of the first FB image will be described with reference to FIGS. 7 to 12.

The control unit 108 controls an aspect of the first FB image related to a display range of the first FB image on the basis of the distance information supplied from the distance information generation unit 106. As an aspect of the first FB image to be controlled, there is a size of the first FB image. FIG. 7 is a diagram illustrating an example of a first pattern of the display control of the first FB image in the information processing device 100 according to the embodiment of the present disclosure. For example, as illustrated in the left drawing of FIG. 7, the virtual object 20 corresponding to a hand of the user and a first FB image 30A are projected to the projection region 10. Then, when a finger of the user which is a manipulator comes closer to the input recognition region (that is, a distance indicated by the distance information is shortened), as illustrated in the right drawing of FIG. 7, the first FB image 30A becomes smaller. Conversely, when the finger of the user moves away from the input recognition region, the first FB image 30A becomes larger. Note that the first FB image 30A is not limited to an image with a circular shape and may be an image with a polygonal shape or an image with any other figure.

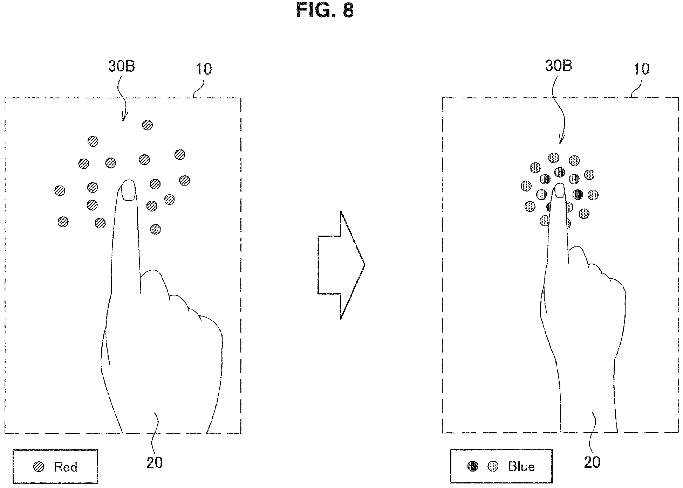

In addition, as an aspect of the first FB image to be controlled, there is a shape of the first FB image. FIG. 8 is a diagram illustrating an example of a second pattern of the display control of the first FB image in the information processing device 100 according to the embodiment of the present disclosure. For example, as illustrated in the left drawing of FIG. 8, the virtual object 20 corresponding to the hand of the user and a first FB image 30B such as a set of objects with a particle shape are projected to the projection region 10. Then, when a finger of the user which is a manipulator comes closer to the input recognition region, as illustrated in the right drawing of FIG. 8, the objects with the particle shape are collected so that the first FB image 30B is formed in a predetermined shape (for example, a circle). Conversely, when the finger of the user moves away from the input recognition region, the objects with the particle shape are dispersed, so that the shape of the first FB image 30B collapses. In this way, the degree to which the first FB image is formed is changed in accordance with the distance information. Note that, as another example, the shape of the first FB image may be changed from an amoeboid shape to a circular shape and vice versa on the basis of the distance information.

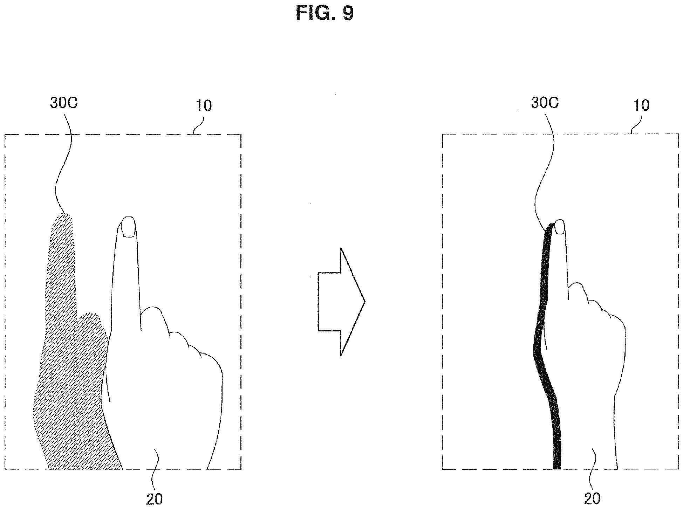

In addition, the control unit 108 controls display of the first FB image with a shape corresponding to a manipulator on the basis of the distance information. As the first FB image with the shape corresponding to the manipulator, there is an image evoking the shadow of the manipulator (hereinafter also simply referred to as the shape of the manipulator). Then, the control unit 108 controls depth of the shadow of the manipulator on the basis of the distance information. FIG. 9 is a diagram illustrating an example of a third pattern of the display control of the first FB image in the information processing device 100 according to the embodiment of the present disclosure. For example, as illustrated in the left drawing of FIG. 9, the virtual object 20 corresponding to a finger of the user and a first FB image 30C such as the shadow of the virtual object 20 (that is, the shadow of a finger of the user) are projected to the projection region 10. Then, when the finger of the user which is a manipulator becomes closer to the input recognition region, as illustrated in the right drawing of FIG. 9, the first FB image 30C becomes thicker (that is, transmittance of light decreases). Conversely, when the finger of the user becomes away from the input recognition region, the first FB image 30C becomes thin (that is, the transmittance of light increases).

Note that the control unit 108 controls display of the second virtual object corresponding to the manipulator (hereinafter also referred to as a manipulator image) and the first FB image may be displayed on the basis of the manipulator image. As the manipulator image, there is a generated image such as a captured image or an illustration image of a manipulation device or a part of the body of the user performing a manipulation. Specifically, the first FB image with a shape corresponding to the manipulator is decided on the basis of the manipulator image. For example, the manipulator image may be the virtual object 20 corresponding to a hand of the user illustrated in FIG. 9 and the first FB image 30C may be a virtual shadow simulated as if virtual light were radiated to the virtual object 20. Note that the display of the manipulator image may be controlled in response to a manipulation of the manipulator by the user. For example, the manipulator image may be moved or rotated in response to movement or rotation of the manipulator.

In addition, the control unit 108 controls a virtual effect on the first FB image on the basis of the distance information. Here, the virtual effect on the first FB image means a virtual effect that has no influence on a display range of a size, a shape, or the like of the first FB image. As the control of the virtual effect on the first FB image, there is transparency of the first FB image. The description will be made with reference to FIG. 7. For example, when a finger of the user which is a manipulator becomes closer to the input recognition region, as illustrated in the right drawing of FIG. 7, the transparency of the first FB image 30A becomes lower than that of the first FB image 30A illustrated in the left drawing of FIG. 7. Conversely, when the finger of the user becomes away from the input recognition region, the transparency of the first FB image 30A increases.

In addition, as control of the virtual effect on the first FB image, there is a color of the first FB image. The description will be made with reference to FIG. 8. For example, when a finger of the user which is a manipulator becomes closer to the input recognition region, as illustrated in the right drawing of FIG. 8, the color of the first FB image 30B is changed to a color (blue) of a cooler color system than the first FB image 30B (red) illustrated in the left drawing of FIG. 8. Conversely, when the finger of the user becomes away from the input recognition region, the color of the first FB image 30B is changed to a color of a warm color system. Note that texture may be controlled instead of the color or together with the color.

In addition, as control of the virtual effect on the first FB image, there is gradation of the first FB image. The description will be made with reference to FIG. 9. For example, when a finger of the user which is a manipulator becomes closer to the input recognition region, as illustrated in the right drawing of FIG. 9, a contour of the first FB image 30C is blurred further than that of the first FB image 30C illustrated in the left drawing of FIG. 9. Conversely, when the finger of the user becomes away from the input recognition region, the contour of the first FB image 30C becomes clear.

In addition, the control unit 108 controls display density of the first FB image on the basis of the distance information. The description will be made with reference to FIG. 8. For example, when a finger of the user which is a manipulator becomes closer to the input recognition region, as illustrated in the right drawing of FIG. 8, parts such as dots forming the first FB image 30B are denser than parts forming the first FB image 30B illustrated in the left drawing of FIG. 8. Conversely, when the finger of the user becomes away from the input recognition region, the parts forming the first FB image 30B are dispersed. Note that display density of the first FB image may be changed within a fixed display range. For example, the number of parts forming the first FB image may be increased or decreased with the display range of the first FB image being fixed.

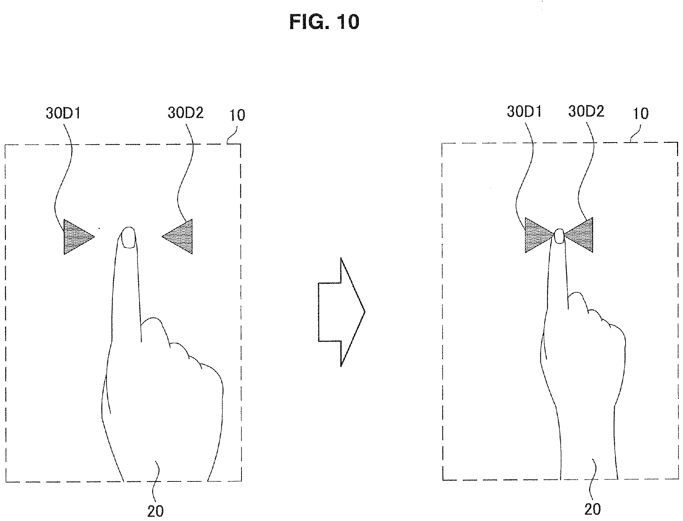

In addition, the control unit 108 controls a positional relation between the plurality of first FB images on the basis of the distance information. Specifically, the control unit 108 controls a distance between the plurality of first FB images in accordance with the distance information. FIG. 10 is a diagram illustrating an example of a fourth pattern of the display control of the first FB image in the information processing device 100 according to the embodiment of the present disclosure. For example, as illustrated in the left drawing of FIG. 10, the virtual object 20 corresponding to a hand of the user and the first FB images 30D1 and 30D2 are projected to the projection region 10. Then, when a finger of the user which is a manipulator becomes closer to the input recognition region, as illustrated in the right drawing of FIG. 10, the first FB images 30D1 and 30D2 are closer to each other. Conversely, when the finger of the user becomes away from the input recognition region, the first FB images 30D1 and 30D2 becomes distant from each other. Note that the first FB images 30D are not limited to an image with a triangular shape and may be an image with a circular shape or an image with a polygonal shape equal to or greater than a rectangular shape or a character image such as an animal or human image.

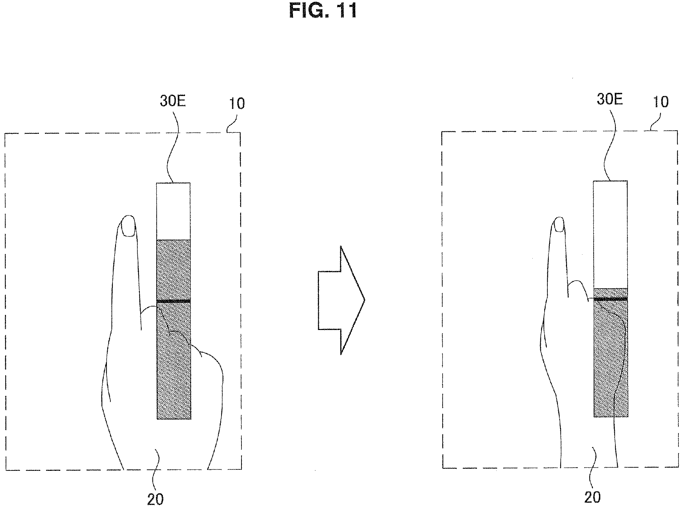

In addition, the control unit 108 controls display of the first FB image expressing a value of the distance information on the basis of the distance information. Specifically, the control unit 108 controls display of an indicator indicating the value of the distance information. FIG. 11 is a diagram illustrating an example of a fifth pattern of the display control of the first FB image in the information processing device 100 according to the embodiment of the present disclosure. For example, as illustrated in the left drawing of FIG. 11, the virtual object 20 corresponding to a hand of the user and a first FB image 30E indicating the value of the distance information as a length in the vertical direction are projected to the projection region 10. Then, when a finger of the user which is a manipulator becomes closer to the input recognition region, as illustrated in the right drawing of FIG. 11, the length of the first FB image 30E is shortened. Conversely, when the finger of the user becomes away from the input recognition region, the length of the first FB image 30E is lengthened. Note that the first FB image indicating the value of the distance information may be an image indicating a numerical value equivalent to the value of the distance information. In addition, the above-described second threshold may be expressed in the first FB image. For example, the second threshold may be expressed as a middle line of the first FB image 30E illustrated in FIG. 11. Similarly, the first threshold may be expressed in the first FB image.

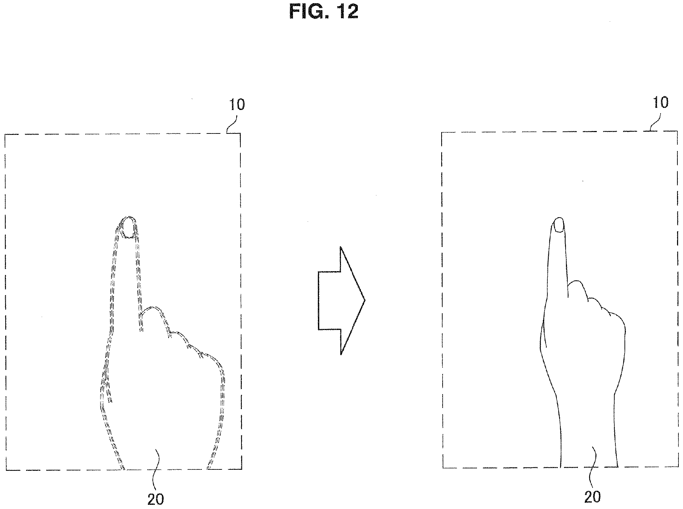

In addition, the control unit 108 may control a manipulator image as the first FB image. Specifically, the control unit 108 controls display of manipulator image on the basis of the distance information. The display control of the manipulator image may be substantially the same as a part of the display control of the above-described first FB image. FIG. 12 is a diagram illustrating an example of a sixth pattern of the display control of the first FB image in the information processing device 100 according to the embodiment of the present disclosure. For example, as illustrated in the left drawing of FIG. 12, the virtual object 20 which is a manipulator image corresponding to a hand of the user is projected to the projection region 10. Herein, since the virtual object 20 operates as the first FB image, the first FB image is not separately projected. Then, when a finger of the user which is a manipulator becomes closer to the input recognition region, as illustrated in the right drawing of FIG. 12, the contour of the virtual object 20 becomes clearer than the virtual object 20 illustrated in the left drawing of FIG. 12. Conversely, when the finger of the user becomes away from the input recognition region, the contour of the virtual object 20 is blurred.

### (3. Control of display aspect of first FB image based on manipulation target information)

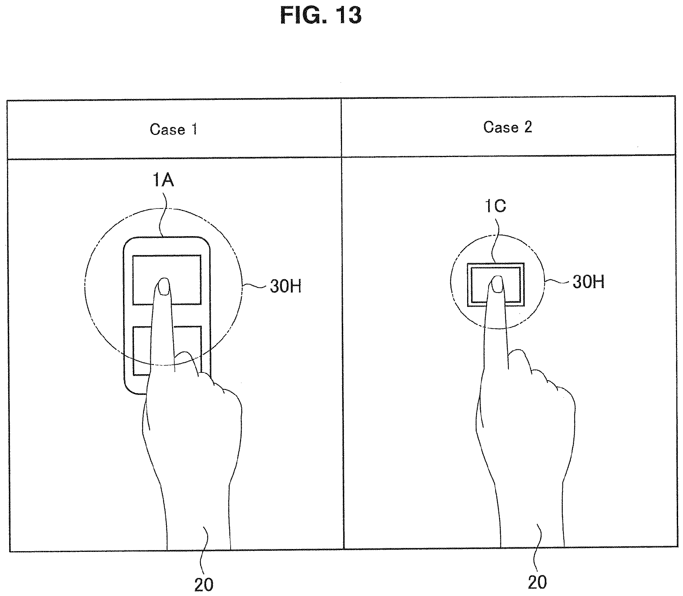

The control unit 108 further controls display of the first FB image on the basis of information regarding a manipulation target (hereinafter also referred to as manipulation target information). As the manipulation target information, there is information regarding an aspect of a manipulation target. For example, the control unit 108 controls the display of the first FB image on the basis of information regarding a size or a shape of the manipulation target. Further, display control of the first FB image based on the manipulation target information will be described with reference to FIG. 13. FIG. 13 is a diagram illustrating an example of the display control of the first FB image based on the manipulation target information in the information processing device 100 according to the embodiment of the present disclosure.

First, the control unit 108 acquires the manipulation target information before display of the first FB image starts. For example, when it is decided that the first FB image is displayed, the control unit 108 acquires information of a size, a shape, a color, or the like of a manipulation target recognized as the manipulation target information from the recognition unit 104.

Subsequently, after the control unit 108 decides display control of the first FB image (hereinafter also referred to as first display control) based on the distance information, the control unit 108 decides display control of the first FB image based on the manipulation target information (hereinafter also referred to as second display control). Specifically, the control unit 108 decides a size of the first FB image on the basis of the size of the manipulation target acquired from the recognition unit 104 in addition to the display control of the first FB image decided on the basis of the distance information. For example, in an example of Case 1 in FIG. 13, a size of a first FB image 30H is decided as a size including a predetermined range or more of a manipulation target 1A. In addition, in an example of Case 2 in FIG. 13, since a manipulation target 1C is smaller than the manipulation target 1A, the size of the first FB image 30H is decided to be smaller than the size of the first FB image 30H in Case 1. Note that a processing order of the first display control and the second display control may be reverse.

Note that when the size of the first FB image is decided in accordance with the size of the manipulation target, a virtual effect of the first FB image may be changed instead of the change in the size of the first FB image or together with the change in the size of the first FB image in a case in which the size of the first FB image is smaller than a predetermined size. For example, the control unit 108 may increase the transparency of the first FB image while reducing the first FB image to the predetermined size.

In addition, in a case in which the manipulation target is a virtual object which is not an actual object, the manipulation target may be extended. For example, when a virtual object of an icon such as a magnifying glass is displayed and a manipulation of selecting the icon is recognized, the manipulation target may be extended and displayed. Thus, it is possible to prevent the first FB image from becoming small.

### (4. Display control of second FB image after input recognition)

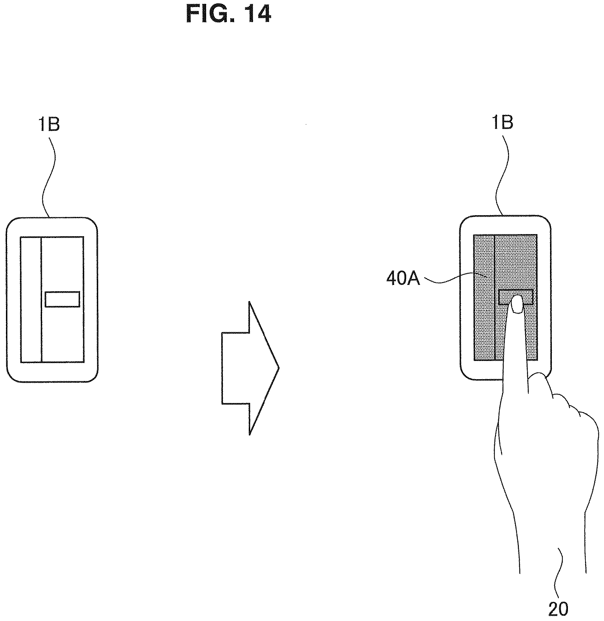

The control unit 108 further controls display of a third virtual object according to a manipulation target by a manipulator (hereinafter also referred to as a second feedback image or a second FB image) on the basis of the recognition of an input by the manipulator. Specifically, when the value of the distance information reaches a second threshold or less (that is, the manipulator reaches the input recognition region), the control unit 108 performs a process corresponding to an input by the manipulator assuming that the input is performed by the manipulator. In addition, when the value of the distance information reaches a second threshold or less, the control unit 108 causes the projection device 300 to project the second FB image in accordance with the manipulation target. Further, the display control of the second FB image will be described with reference to FIG. 14. FIG. 14 is a diagram illustrating an example of the display control of the second FB image in the information processing device 100 according to the embodiment of the present disclosure.

The control unit 108 determines whether the value of the distance information reaches the second threshold or less. For example, the control unit 108 periodically determines whether the value of the distance information reaches the second threshold or less while the first FB image is projected.

When it is determined that the value of the distance information reaches the second threshold or less, the control unit 108 performs a process on the manipulation target corresponding to the input by the manipulator. For example, when it is determined that the value of the distance information reaches the second threshold or less, the control unit 108 switches a switch 1B illustrated in FIG. 14 between ON and OFF. Herein, ON or OFF of activation, a function, or the like of a device connected to the switch 1B is switched without controlling the switch 1B. Note that the switch 1B may be controlled such that ON or OFF of the switch 1B may be actually switched.

In addition, the control unit 108 causes the projection device 300 to project the second FB image. For example, when it is determined that the value of the distance information reaches the second threshold or less, the control unit 108 causes the projection device 300 to project a second FB image 40A illustrated in the right drawing of FIG. 14 in accordance with a position and a shape of the switch 1B.

Note that recognition of the input by the manipulator may be realized using information other than the distance information. For example, the control unit 108 controls display of the second FB image on the basis of a pressure on the input recognition region from the manipulator. For example, the control unit 108 controls display or non-display of the second FB image in accordance with information regarding whether there is a pressure supplied from a pressure sensor or the like installed in the input recognition region as the measurement device 200. Further, a display aspect of the second FB image may be controlled in accordance with information regarding the degree of the pressure supplied from the pressure sensor.

In addition, the control unit 108 may control the display of the second FB image on the basis of a change in the shape of the manipulator. For example, the control unit 108 controls display or non-display of the second FB image in accordance with a change or non-change in the shape of a finger of the user recognized by the recognition unit 104 (for example, a change or the like to a shape applying a force). Further, the display aspect of the second FB image may be controlled in accordance with the degree of change in the shape.

### <1.3. Process of device>

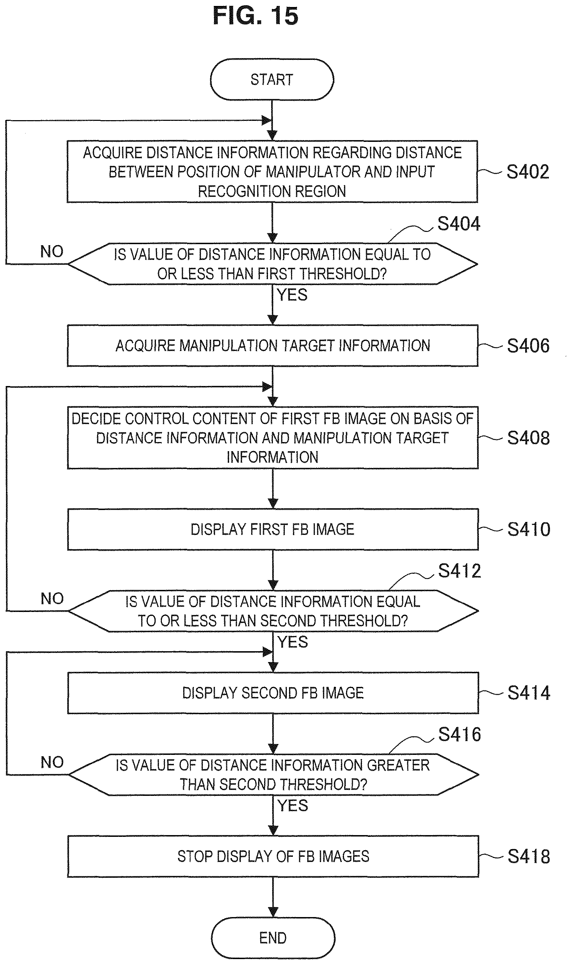

Next, a process of the information processing device 100 will be described with reference to FIG. 15. FIG. 15 is a flowchart conceptually illustrating an example of a process of the information processing device 100 according to the embodiment of the present disclosure.

The information processing device 100 acquires the distance information regarding the distance between the position of the manipulator and the input recognition region (step S402). Specifically, the recognition unit 104 recognizes the manipulator and the input recognition region on the basis of a measurement result of the measurement device 200 and the distance information generation unit 106 generates the distance information regarding the distance between the recognized manipulator and input recognition region.

Subsequently, the information processing device 100 determines whether the value of the distance information is equal to or less than the first threshold (step S404). Specifically, the control unit 108 determines whether the value of the generated distance information is equal to or less than the first threshold.

When it is determined that the value of the distance information is equal to or less than the first threshold (YES in step S404), the information processing device 100 acquires the manipulation target information (step S406). Specifically, when it is determined that the value of the distance information is equal to or less than the first threshold, the recognition unit 104 recognizes the aspect of the manipulation target and supplies the aspect of the manipulation target to the control unit 108.

Subsequently, the information processing device 100 decides control content of the first FB image on the basis of the distance information and the manipulation target information (step S408). Specifically, the control unit 108 decides the first display control on the first FB image on the basis of the distance information and further decides the second display control on the basis of the aspect of the manipulation target recognized by the recognition unit 104.

Subsequently, the information processing device 100 causes a display device to display the first FB image (step S410). Specifically, the control unit 108 causes the projection device 300 to project the first FB image by performing the decided first display control and second display control.

Subsequently, the information processing device 100 determines whether the value of the distance information is equal to or less than the second threshold (step S412). Specifically, the control unit 108 determines whether the value of the distance information is equal to or less than the second threshold after the projection of the first FB image.

When it is determined that the value of the distance information is equal to or less than the second threshold (YES in step S412), the information processing device 100 causes the display device to display the second FB image (step S414). Specifically, when it is determined that the value of the distance information is equal to or less than the second threshold, the control unit 108 causes the projection device 300 to project the second FB image.

Subsequently, the information processing device 100 determines whether the value of the distance information is greater than the second threshold (step S416). Specifically, the control unit 108 determines whether the value of the distance information is greater than the second threshold after the projection of the second FB image.

When it is determined that the value of the distance information is greater than the second threshold (YES in step S416), the information processing device 100 stops the display of the FB images (step S418). Specifically, when it is determined that the value of the distance information is greater than the second threshold, the control unit 108 causes the projection device 300 to stop the projection of the first and second FB images. Note that when the second FB image is projected in step S414, the control unit 108 may cause the projection device 300 to stop the projection of the first FB image.

### <1.4. Summary of embodiment of present disclosure>

In this way, according to the embodiment of the present disclosure, the information processing device 100 controls an output related to the virtual object on the basis of the distance information changed in accordance with a distance between a manipulator recognized in a different manipulation region from a display region in which the virtual object is viewed and an input recognition region in which an input by the manipulator in the manipulation region is recognized.

In the related art, in a case in which the display region and the manipulation region are provided in different places, it was difficult for a user to grasp a situation of a manipulation using a manipulator while the user views the display region. Therefore, the user performed a manipulation by the manipulator while confirming a manipulation result in the display region, and thus an intuitive manipulation interfered.

In contrast, according to the embodiment of the present disclosure, a reference for a distance between the position of a manipulator and a position at which an input of a manipulation by the manipulator is recognized (hereinafter also referred to as a sense of distance related to a manipulation) can be presented to a user. Therefore, the user can intuitively manipulate the manipulator while viewing the display region. Accordingly, it is possible to suppress deterioration in manipulability in a case in which the display region and the manipulation region are different. In particular, since it is more difficult for the user to grasp the sense of distance of a manipulation in a depth direction to the user in a 3-dimensional space than a manipulation in different directions (for example, vertical and horizontal directions), the information processing device 100 is beneficial. In addition, since an intuitive manipulation is possible, it is possible to accelerate a skill of an input manipulation.

In addition, the output includes display of at least one first virtual object. Therefore, it is possible to enable the user viewing the display region to ascertain the sense of distance related to a manipulation. In addition, since the sense of vision facilitates understanding of more information at a time than other senses, the sense of distance is enabled to grasp the sense of distance related to a manipulation at a relatively short time.

Note that the output may be an output other than the display of the first FB image. Specifically, the output may be a sound or a tactile vibration. For example, when the value of the distance information is equal to or less than the first threshold, occurrence of a sound such as a mechanical sound or a voice or a tactile vibration is started. In addition, when the value of the distance information is equal to or less than the second threshold, the sound or the tactile vibration is stopped. Note that kinds of sounds or tactile vibrations may be switched instead of stopping the sound or the tactile vibration. In addition, a sound or a tactile vibration may be used together with the display of the first FB image. For example, in a case in which light is inserted into a projection region or there is concern of projection by the projection device 300 interfering, a sound or a tactile vibration based on the distance information may be output instead of or together with the display of the first FB image. In this case, even in a situation in which visibility of the first FB image may not be ensured, the user is enabled to grasp the sense of distance related to a manipulation.

In addition, the information processing device 100 controls an aspect of the first virtual object related to a display range of the first virtual object on the basis of the distance information. Therefore, when the display range of the first FB image is changed, the user is enabled to be aware of a change in the sense of distance related to a manipulation. Accordingly, it is possible to promote an improvement in precision of the manipulation by the user.

In addition, the aspect of the first virtual object includes a size or a shape of the first virtual object. Therefore, by changing the size or the shape of the first FB image in accordance with the distance information, the user is enabled to intuitively understand the sense of distance related to a manipulation.

In addition, the information processing device 100 controls a positional relation between the plurality of first virtual objects on the basis of the distance information. Therefore, for example, by changing the distances of the plurality of first FB images in accordance with the distance information, the user is enabled to understand the sense of distance related to a manipulation intuitively and more accurately.

In addition, the information processing device 100 controls a virtual effect on the first virtual object on the basis of the distance information. Therefore, by using the virtual effect of not changing the display range of the first FB image, the sense of distance related to a manipulation can be presented to the user even in a case in which the sufficient display range may not be ensured in the display of the first FB image. Accordingly, visibility of the display region and conveyance of the sense of distance related to the manipulation can be caused to be compatible.

In addition, the control of the virtual effect on the first virtual object includes control of transparency, gradation, or a color of the first virtual object. Therefore, the user is enabled to effectively recognize the sense of distance related to a manipulation without changing the display range.

In addition, the information processing device 100 controls display density of the first virtual object on the basis of the distance information. Therefore, by controlling magnitude of the display density in accordance with the distance information, the user is enabled to intuitively understand the sense of distance related to a manipulation.

In addition, the first virtual object includes a virtual object with a shape corresponding to the manipulator. Therefore, the user is enabled to easily understand that the first FB image is related to the manipulator manipulated by the user.

In addition, the first virtual object includes a virtual object expressing a value of the distance information. Therefore, the sense of distance related to an accurate manipulation by the user can be presented to the user. Accordingly, it is possible to further accelerate a skill of an input manipulation.

In addition, the information processing device 100 further controls display of the second virtual object corresponding to the manipulator, and the first virtual object includes a virtual object displayed on the basis of the second virtual object. Therefore, by displaying the manipulator image to correspond to the manipulator, the user is enabled to easily grasp a place corresponding to the manipulation by the user in the display region. Further, by displaying the first FB image on the basis of the manipulator image, it is possible to alleviate the sense of discomfort of the user to the first FB image. Accordingly, the user can naturally understand the sense of distance related to the manipulation.

In addition, the display region includes a region including a manipulation target by the manipulator, and the information processing device 100 further controls the display of the first virtual object on the basis of information regarding the manipulation target. Therefore, for example, by controlling the display of the first FB image in accordance with the aspect of the manipulation target, it is possible to prevent one of visibility of the first FB image and visibility of the manipulation target from deteriorating one-sidedly. Accordingly, maintenance or improvement in manipulability of the manipulation target and grasping of the sense of distance related to a manipulation can be caused to be compatible.

In addition, the information processing device 100 controls display or non-display of the first virtual object on the basis of a threshold of the distance information. Therefore, only in a situation in which the user is estimated to desire the sense of distance related to the manipulation, the first FB image can be caused to be displayed. Accordingly, it is possible to present the user with the sense of distance related to the manipulation while suppressing deterioration in visibility of the display region.

In addition, the information processing device 100 controls display of a third virtual object in accordance with a manipulation target by the manipulator on a basis of recognition of an input by the manipulator. Therefore, it is possible to present the user with the fact that an input is received. Accordingly, the user can move to a subsequent manipulation or stop the manipulation, and thus it is possible to improve usability.

### <1.5. Modification examples>

The embodiment of the present disclosure has been described above. Note that the embodiment of the present disclosure is not limited to the above-described example. Hereinafter, first to sixth modification examples of the embodiment of the present disclosure will be described.

### (First modification example)

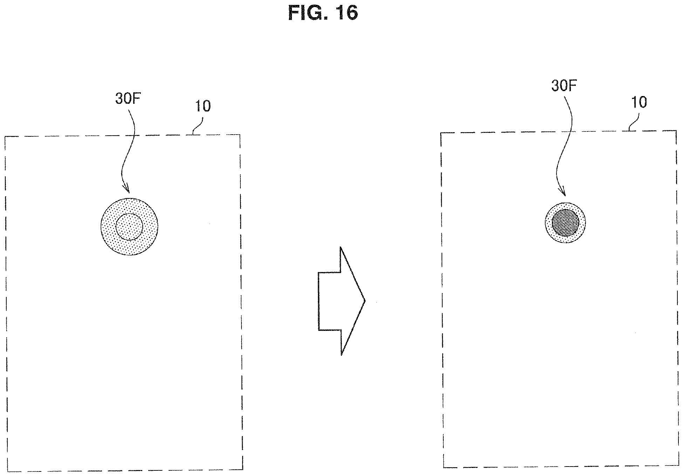

According to a first modification example of the embodiment of the present disclosure, the first FB image may be displayed without displaying the manipulator image. Specifically, the control unit 108 causes only the first FB image to be displayed in the display region. Hereinafter, display control patterns of the first FB images according to the modification example will be described with reference to FIGS. 16 to 20. Note that patterns of the display control which are substantially the same as the first to sixth patterns of the above-described display control will be described in brief and patterns of other display control will be described in detail.

The control unit 108 controls an aspect and a visual effect of the first FB image related to the display range of the first FB image on the basis of the distance information. Specifically, the size of the first FB image and transparency of the first FB image are controlled. FIG. 16 is a diagram illustrating an example of a seventh pattern of the display control of the first FB image in the information processing device 100 according to the first modification example of the embodiment of the present disclosure. For example, as illustrated in the left drawing of FIG. 16, only the first FB image 30F is projected to the projection region 10 without projecting the virtual object 20 corresponding to a hand of the user. The first FB image 30F has two parts of an outer circle and an inner circle. Then, when a finger of the user which is a manipulator becomes closer to the input recognition region, as illustrated in the right drawing of FIG. 16, the outer circle of the first FB image 30F becomes smaller and the transparency of the inner circle decreases. Conversely, when the finger of the user becomes away from the input recognition region, the outer circle of the first FB image 30F becomes larger and the transparency of the inner circle increases.

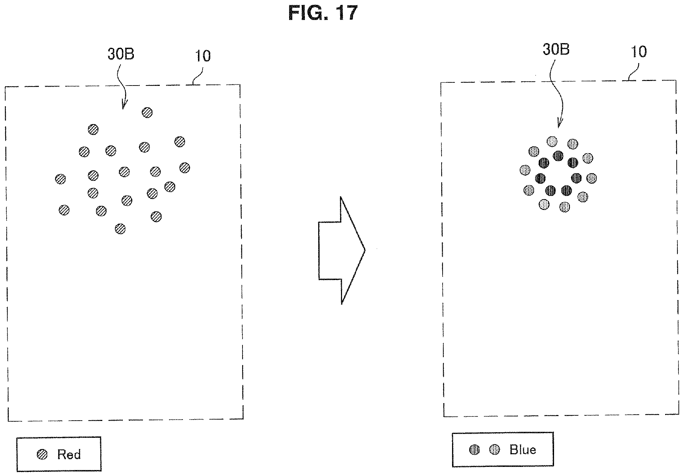

In addition, the control unit 108 controls the shape of the first FB image on the basis of the distance information. FIG. 17 is a diagram illustrating an example of an eighth pattern of the display control of the first FB image in the information processing device 100 according to the first modification example of the embodiment of the present disclosure. For example, as illustrated in the left drawing of FIG. 17, only a first FB image 30B such as a set of objects with a particle shape is projected to the projection region 10 without projecting the virtual object 20 corresponding to a hand of the user. Then, when a finger of the user which is a manipulator becomes closer to the input recognition region, as illustrated in the right drawing of FIG. 17, the objects with the particle shape are collected so that the first FB image 30B is formed in a predetermined shape (for example, a circle).

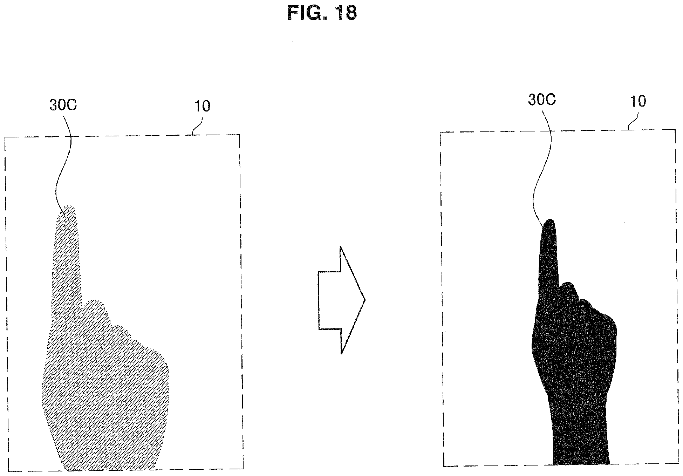

In addition, the control unit 108 controls display of the first FB image such as the shadow of the manipulator on the basis of the distance information. FIG. 18 is a diagram illustrating an example of a ninth pattern of the display control of the first FB image in the information processing device 100 according to the first modification example of the embodiment of the present disclosure. For example, as illustrated in the left drawing of FIG. 18, only a first FB image 30C such as the shadow of a hand of the user is projected to the projection region 10 without projecting the virtual object 20 corresponding to the hand of the user. Then, when a finger of the user which is a manipulator becomes closer to the input recognition region, as illustrated in the right drawing of FIG. 18, the first FB image 30C becomes thicker (that is, transmittance of light decreases).

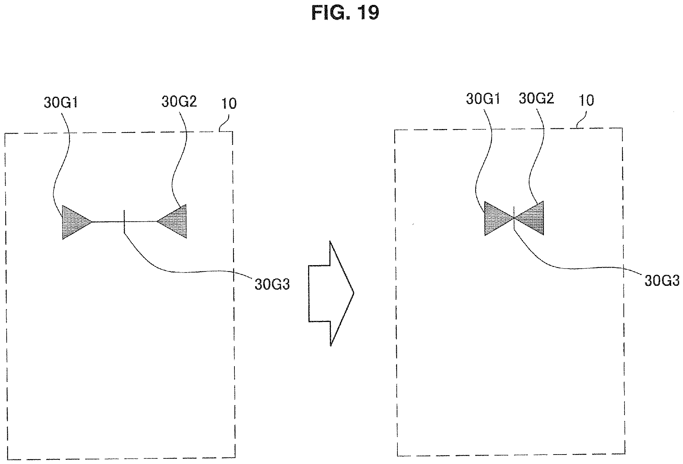

In addition, the control unit 108 controls a distance between the plurality of first FB images and display of other first FB images indicating a relation between the plurality of first FB images in accordance with the distance information. FIG. 19 is a diagram illustrating an example of a tenth pattern of the display control of the first FB image in the information processing device 100 according to the first modification example of the embodiment of the present disclosure. For example, as illustrated in the left drawing of FIG. 19, only first FB image 30G1 and 30G2 and a streak image 30G3 connecting the first FB images 30G1 and 30G2 are projected to the projection region 10 without projecting the virtual object 20 corresponding to a hand of the user. Then, when a finger of the user which is a manipulator becomes closer to the input recognition region, as illustrated in the right drawing of FIG. 19, the first FB images 30G1 and 30G2 become closer and the first FB image 30G3 is shortened.

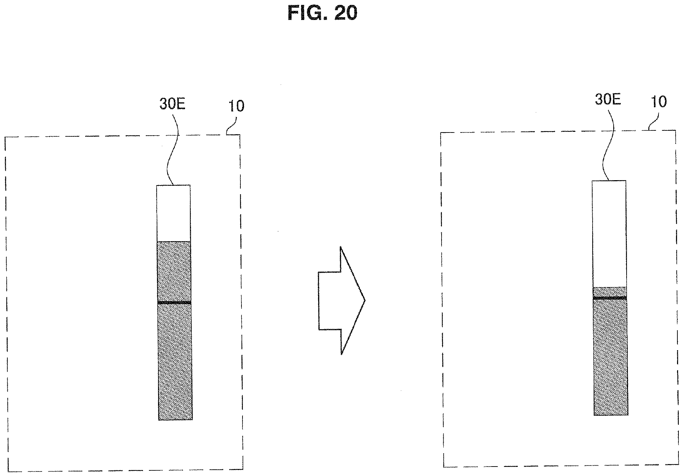

In addition, the control unit 108 controls display of the first FB image expressing a value of the distance information on the basis of the distance information. FIG. 20 is a diagram illustrating an example of an eleventh pattern of the display control of the first FB image in the information processing device 100 according to the first modification example of the embodiment of the present disclosure. For example, as illustrated in the left drawing of FIG. 20, only a first FB image 30E indicating the value of the distance information as a length in the vertical direction is projected to the projection region 10 without projecting the virtual object 20 corresponding to a hand of the user. Then, when a finger of the user which is a manipulator becomes closer to the input recognition region, as illustrated in the right drawing of FIG. 20, the length of the first FB image 30E is shortened.

In this way, according to the first modification example, the information processing device 100 causes the display device to display the first FB image without displaying the manipulator image. Therefore, it is possible to improve the visibility of the first FB image. In addition, in a case in which the manipulation target is in the display region, it is possible to also improve the visibility of the manipulation target.

### (Second modification example)

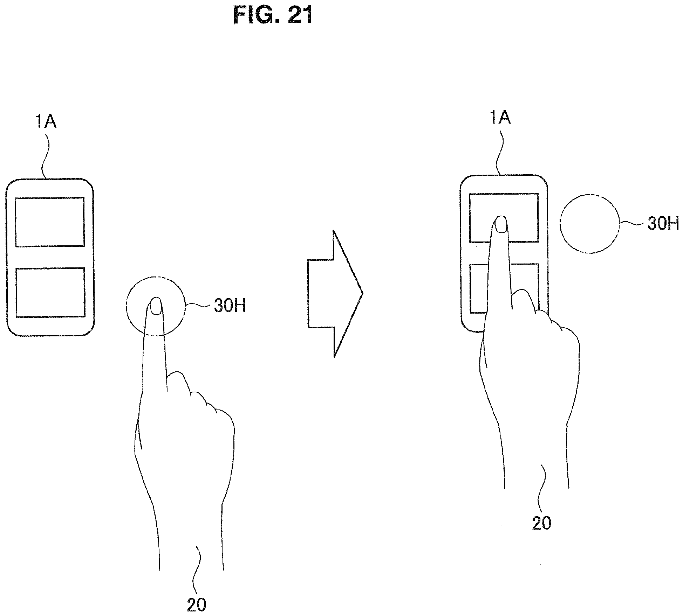

According to a second modification example of the embodiment of the present disclosure, the information processing device 100 may control the display of the first FB image on the basis of a position of manipulation target. Specifically, the control unit 108 causes the display device to display the first FB image, eluding the manipulation target. Further, a process of the modification example will be described with reference to FIG. 21. FIG. 21 is a diagram illustrating an example of display control of the first FB image based on manipulation target information in the information processing device 100 according to the second modification example of the embodiment of the present disclosure.

The control unit 108 causes the display device to display the first FB image when the value of the distance information is equal to or less than the first threshold. For example, as illustrated in the left drawing of FIG. 21, the first FB image 30H and the virtual object 20 are projected.

Subsequently, the control unit 108 causes the first FB image to be moved in accordance with movement of a manipulator. For example, the control unit 108 causes the projection device 300 to change a projection position of the first FB image 30H to a position on the display region in accordance with the movement of the finger of the user. Note that the virtual object 20 is also caused to be moved similarly to the first FB image 30H.

In addition, in a case in which it is determined that the first FB image overlaps the manipulation target in a movement destination, the control unit 108 decides the position of the first FB image to a position separate from the manipulation target. For example, in a case in which the virtual object 20 is caused to be moved in accordance with the movement of the manipulator, as illustrated in the right drawing of FIG. 21, the movement destination of the first FB image in accordance with the movement of the manipulator is the switch 1A which is a manipulation target. Therefore, the control unit 108 decides the movement destination of the first FB image to a position which is adjacent to the switch 1A and does not overlap the switch 1A, as illustrated in the right drawing of FIG. 21. Further, the control unit 108 decides a change designation of the movement destination of the first FB image on the basis of the position of the virtual object 20. For example the control unit 108 decides a position which is within a predetermined range from the virtual object 20 and does not overlap the switch 1A as the movement destination of the first FB image.

In this way, according to the second modification example, the information processing device 100 controls display of the first FB image on the basis of the position of the manipulation target. Therefore, the first FB image can be displayed at the position at which the manipulation target does not overlap the first FB image. Accordingly, the visibility of the first FB image and the visibility of the manipulation target can be caused to be compatible and it is possible to more reliably suppress the deterioration in the manipulability.

Note that the information processing device 100 may select the first FB image on the basis of a color, a shape, or a texture of the manipulation target or the display region. For example, the control unit 108 causes the projection device 300 to project the first FB image with a color, a shape, or a texture which is not the same as or analogous to the manipulation target or the display region. In this case, it is possible to ensure the visibility of the first FB image.

### (Third modification example)

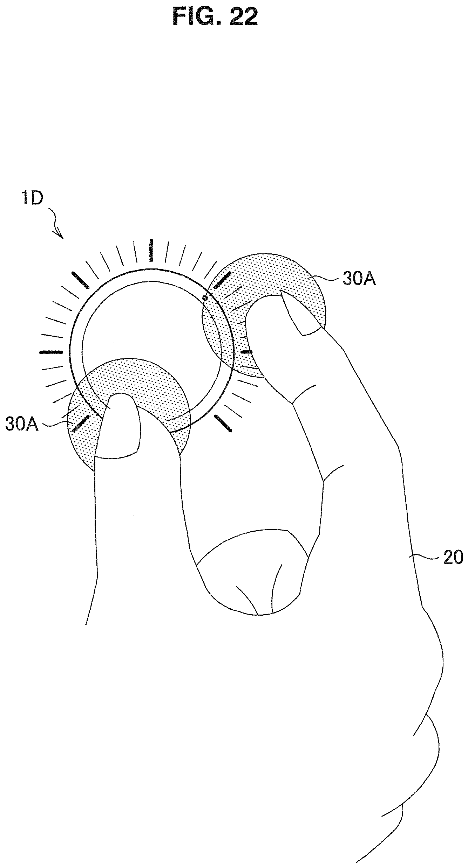

According to a third modification example of the embodiment of the present disclosure, the number of manipulators for manipulating a manipulation target may be plural. Specifically, the control unit 108 controls the display of the first FB image in accordance with the number of manipulators. For example, the control unit 108 causes the display device to display the number of first FB images corresponding to the number of manipulators. Further, a process according to the modification example will be described with reference to FIG. 22. FIG. 22 is a diagram illustrating a display example of the plurality of first FB images in the information processing device 100 according to the third modification example of the embodiment of the present disclosure.

The control unit 108 causes the display device to display the first FB image with regard to each of a plurality of manipulators recognized by the recognition unit 104. For example, when the recognition unit 104 recognizes two fingers (the thumb and the forefinger) illustrated in FIG. 22 and the value of the distance information related to the two fingers is equal to or less than the first threshold, the control unit 108 causes the projection device 300 to project each first FB image 30A with regard to each of the two fingers. Note that in a case in which the value of the distance information with regard to only some manipulators among a plurality of manipulators is equal to or less than the first threshold, the first FB image may be displayed with regard to only some of the manipulators, the first FB image may be displayed with regard to all the plurality of manipulators, or the first FB image may not be displayed with regard to all the plurality of manipulators. In addition, for the first FB image, any of the above-described first FB mages in addition to the first FB images 30A may be projected.

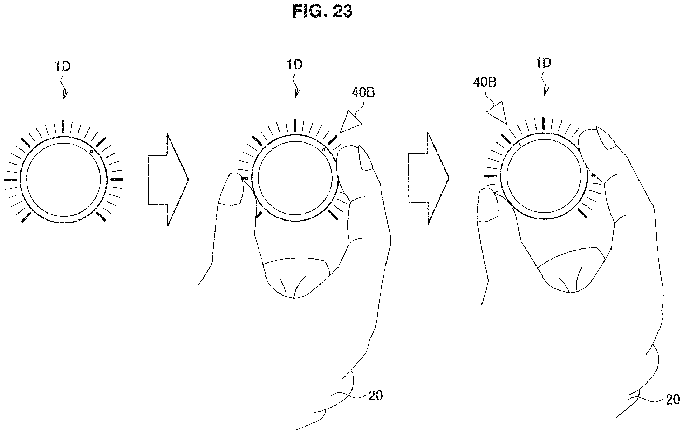

Further, the control unit 108 may control the display of the second FB image on the basis of manipulations on the plurality of manipulators. Specifically, when inputs by the plurality of manipulators are recognized, the control unit 108 causes the display device to display the second FB image and controls an aspect of the second FB image in response to continuously input manipulations. Display control of the second FB image based on manipulations on the plurality of manipulators will be described in detail with reference to FIG. 23. FIG. 23 is a diagram illustrating an example of display control of the second FB image in the information processing device 100 according to the third modification example of the embodiment of the present disclosure.

When the values of the distance information with regard to the plurality of manipulators are equal to or less than the second threshold, the control unit 108 causes the display device to display the second FB image. For example, when a thumb and a forefinger of a user are manipulators and each value of the distance information related to the manipulators reaches the second threshold or less, a second FB image 40B with a triangular shape illustrated in FIG. 23 is projected to a predetermined position of a scale of a dial 1D which is a manipulation target.

Subsequently, the control unit 108 controls a display aspect of the second FB image on the basis of a manipulation performed when the value of the distance information is equal to or less than the second threshold. For example, when a manipulation of rotating a hand is performed with two fingers, which are manipulators, being fixed with respect to the hand, as illustrated in the right drawing of FIG. 23, the position of the second FB image 40B is caused to be rotationally moved centering the dial 1D in accordance with a rotation angle of the hand. In addition, the control unit 108 may cause the dial 1D to be actually rotated. For example, the control unit 108 causes a device including the dial 1D to rotate the dial 1D by transmitting an instruction to rotate the dial 1D.

In this way, according to the third modification example, the information processing device 100 controls the display of the first FB image in accordance with the number of manipulators. Therefore, in a complicated manipulation using a plurality of manipulators, the sense of distance related to a manipulation can be presented to the user. Accordingly, it is possible to improve manipulability in the complicated manipulation.

In addition, the information processing device 100 controls the display of the second FB image on the basis of the manipulations by the plurality of manipulators. Therefore, the user can manipulate the manipulation target in which a manipulation more complicated than a manipulation by a single manipulator is requested. Accordingly, it is possible to extend an application range of the information processing device 100.

### (Fourth modification example)

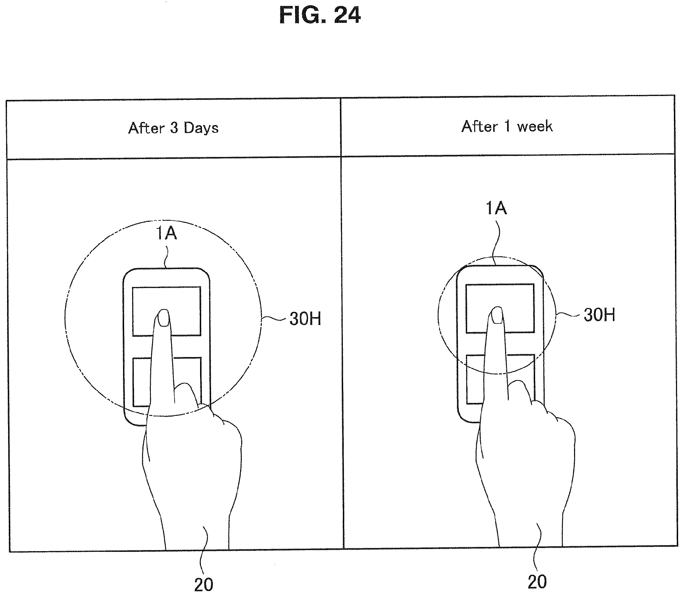

According to a fourth modification example of the embodiment of the present disclosure, the information processing device 100 controls display of the first FB image on the basis of information regarding a user manipulating a manipulator (hereinafter also referred to as user information). As the user information, there is information regarding of a skill level of the manipulation by the user (hereinafter also referred to as skill level information). For example, the recognition unit 104 identifies the user performing a manipulation and the control unit 108 acquires the skill level information of the identified user. Then, the control unit 108 controls the display of the first FB image on the basis of the skill level information. Further, a process according to the modification example will be described in detail with reference to FIG. 24. FIG. 24 is a diagram illustrating an example of display control of the first FB image in the information processing device 100 according to the fourth modification example of the embodiment of the present disclosure.

The recognition unit 104 recognizes the user performing the manipulation in the manipulation region. For example, the recognition unit 104 acquires image information in which the user performing the manipulation in the manipulation region is shown from the measurement device 200 via the communication unit 102. Then, the recognition unit 104 recognizes the user using a face recognition technology on the basis of the acquired image information. Note that the method of recognizing the user is not limited thereto and any other method may be used.

Subsequently, the control unit 108 acquires the skill level information of the recognized user. For example, the control unit 108 calculates the skill level of the manipulation from a manipulation history of the user recognized by the recognition unit 104. Note that the skill level information may be stored in the information processing device 100 or may be stored in an external device.

Then, the control unit 108 determines an aspect of the first FB image on the basis of the acquired skill level information. Specifically, the control unit 108 causes the display device to display the first FB image with a size in accordance with the skill level information. For example, the control unit 108 causes the projection device 300 to project the larger first FB image as the calculated or acquired skill level is higher. As illustrated in FIG. 24, a first FB image 30H after one week passes after use start of the information processing device 100 is projected smaller than the first FB image 30H after 3 days passes from the use start. This is because the skill level of a manipulation is considered to be higher as a time elapsed from the use start is longer. Note that an aspect in accordance with the skill level may be the shape, the display position, the virtual effect, or the like described above in addition to the size.

In addition, as the user information, there is identification information of the user. For example, the control unit 108 controls the aspect of the first FB image depending on an individual user identified by the recognition unit 104. In addition, as the user information, there is attribute information of the user. For example, the control unit 108 controls the aspect of the first FB image depending on an age, a sex, an address, nationality, or the like of the user recognized by the recognition unit 104.

In this way, according to the fourth modification example, the information processing device 100 further controls the display of the first FB image on the basis of information related to the user manipulating the manipulator. Here, a manipulation behavior generally differs for each user for which a skill level, a nature, or the like of the user is a factor. Therefore, as in the modification example, by causing the first FB image to be changed in accordance with the user, it is possible to supply the sense of distance related to a manipulation appropriate for the individual user.

### (Fifth modification example)

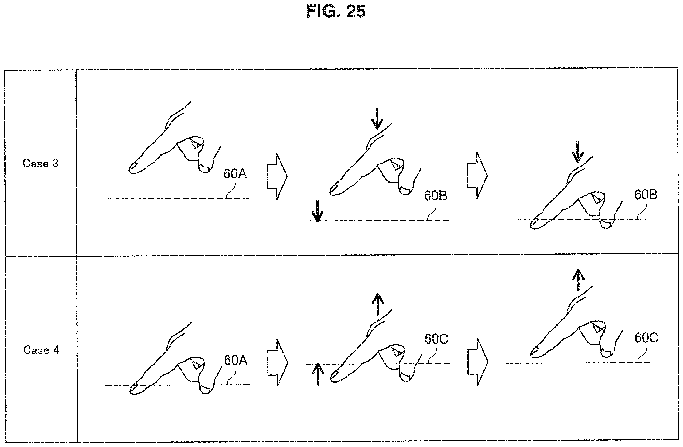

According to a fifth modification example of the embodiment of the present disclosure, the first threshold of the distance information may be variable. Specifically, the control unit 108 controls the first threshold on the basis of the distance information. For example, in a case in which a difference between the value of the distance information and the first threshold is within a predetermined range, the control unit 108 changes the first threshold to a value at which the difference between the value of the distance information and the first threshold stretches. A process of the modification example will be described with reference to FIG. 25. FIG. 25 is a diagram illustrating an example of control of the first threshold of the distance information in the information processing device 100 according to the fifth modification example of the embodiment of the present disclosure.

First, control of the first threshold before the display of the first FB image will be described with reference to Case 3 of FIG. 25. In a case in which the value of the distance information is greater than the first threshold, the control unit 108 lowers the first threshold when the value of the distance information reaches a value within the predetermined range with regard to the first threshold. For example, when the finger of the user which is a manipulator reaches a predetermined height higher than a first threshold value 60A, the first threshold is lowered from the first threshold 60A to 60B.

Thereafter, when the value of the distance information reaches the lowered first threshold or less, the control unit 108 causes the display device to display the first FB image. For example, when the first threshold is lowered to the first threshold 60B and the finger of the user is subsequently further lowered to the first threshold 60B or less, an input by the finger of the user is recognized. That is, the first FB image is projected to a projection region.

Subsequently, control of the first threshold after the display of the first FB image will be described with reference to Case 4 of FIG. 25 will be described. In a case in which the value of the distance information is equal to or less than the first threshold, the control unit 108 raises the first threshold when the value of the distance information reaches the predetermined range with regard to the first threshold. For example, when the finger of the user which is a manipulator reaches a predetermined height lower than a first threshold value 60A, the first threshold is raised from the first threshold 60A to 60C.

Thereafter, when the value of the distance information reaches a value greater than the raised first threshold or more, the control unit 108 causes the display device to stop the display of the first FB image. For example, when the first threshold is raised to the first threshold 60C and the finger of the user is subsequently further raised to the first threshold 60C, the projection of the first FB image is stopped.

Note that the control unit 108 may control the first threshold on the basis of information regarding the manipulator (hereinafter also referred to as manipulator information). As the manipulator information, there is information regarding an aspect of a manipulator. Specifically, the control unit 108 controls the first threshold on the basis of a size of the manipulator. For example, the first threshold is set so that the first threshold is higher as the finger of the user is larger. In addition, the control unit 108 may control the first threshold on the basis of a speed of movement of the manipulator. For example, the first threshold is set so that the first threshold is higher as a movement speed or acceleration of the finger of the user is faster.

In addition, the control unit 108 may control the first threshold on the basis of the user information. Specifically, the control unit 108 may control the first threshold on the basis of the attribute information of the user. As the attribute information of the user, there is information regarding an age, a sex, handedness, or the like of the user. For example, the first threshold is set so that the first threshold is higher as the age of the user is higher.

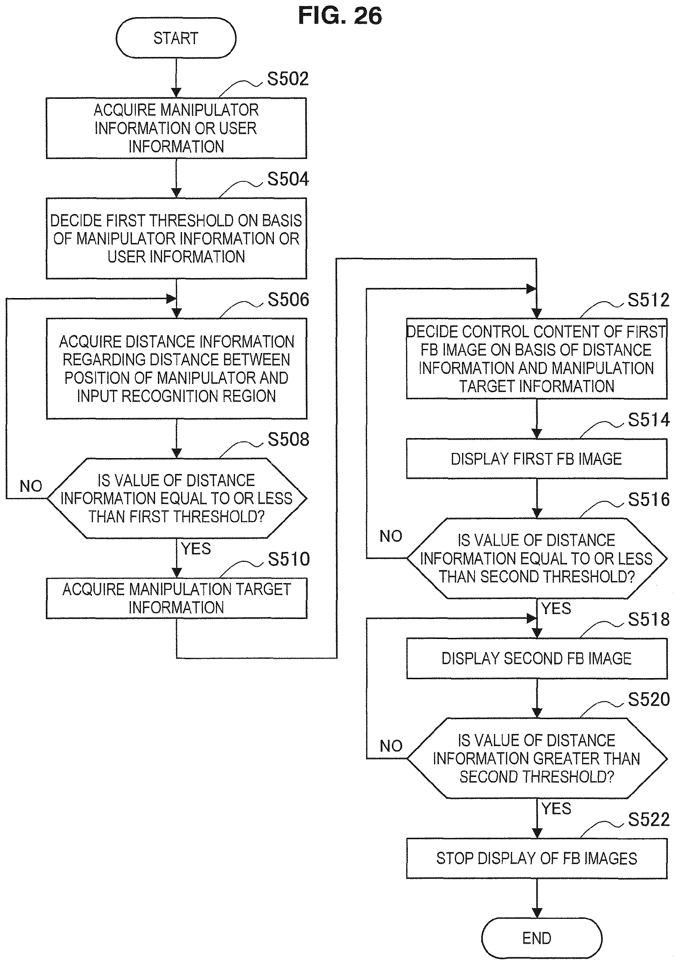

Further, a process of controlling the first threshold on the basis of the manipulator information or the user information will be described with reference to FIG. 26. FIG. 26 is a flowchart conceptually illustrating an example of a process to which the control of the first threshold in which manipulator information or user information is used is added in the information processing device 100 according to the fifth modification example of the embodiment of the present disclosure.

The information processing device 100 acquires the manipulator information or the user information (step S502). Specifically, the recognition unit 104 recognizes the manipulator and an aspect of the manipulator which is in the manipulation region and supplies information regarding the aspect of the recognized manipulator to the control unit 108. In addition, the recognition unit 104 recognizes a user which is in the manipulation region using a face recognition technology or the like and supplies identification information or the like of the recognized user to the control unit 108.

Subsequently, the information processing device 100 decides the first threshold on the basis of the manipulator information or the user information (step S504). Specifically, the control unit 108 changes the first threshold from a reference value on the basis of information regarding the acquired aspect of the manipulator. In addition, the control unit 108 changes the first threshold from the reference value on the basis of the acquired identification information of the user and the attribute information of the user to be acquired. Of course, the first threshold may not be changed as a result in some cases.

Since the processes (steps S506 to S522) after the first threshold is decided are substantially the same as the processes described with reference to FIG. 15, the description thereof will be omitted.

In addition, the plurality of first thresholds of the distance information may be provided. Specifically, the control unit 108 selects the first threshold to be used for a display control process for the first FB image from the plurality of first threshold values on the basis of the manipulator information or the user information. For example, in a case in which a speed of movement of the manipulator is equal to or greater than a predetermined value, the control unit 108 selects the first threshold higher than the reference value (that is, a distance between the manipulator and the input recognition region is long). Then, when the value of the distance information reaches the selected first threshold or less, the control unit 108 causes the projection device 300 to project the first FB image.

In this way, according to the fifth modification example, the information processing device 100 controls the first threshold on the basis of the distance information. Therefore, by changing the firs threshold depending on a situation, it is possible to optimize a display time of the first FB image. Accordingly, the user is enabled to grasp the sense of distance related to the manipulation more reliably and visibility of the display region can be prevented from deteriorating due to the display of the first FB image.

In addition, the information processing device 100 controls the first threshold on the basis of the information regarding the manipulator. Here, as the manipulator is larger and the movement of the manipulator is faster, a time taken until the manipulator reaches the input recognition region is shorter, and thus the display time of the first FB image is shorter. Accordingly, by setting the first threshold in accordance with the manipulator, it is possible to optimize the display time of the first FB image. Thus, the user is enabled to reliably grasp the sense of distance related to the manipulation.

In addition, the information processing device 100 controls the first threshold on the basis of information regarding the user. Here, even in a case in which the first FB image is presented, a time taken for the user to grasp the sense of distance related to the manipulation generally differs. For example, as the age of the user is higher, a time take to grasp the sense of distance related to the manipulation is longer. Accordingly, by setting the first threshold value in accordance with the user, it is possible to optimize the display time of the first FB image for the user. Thus, the user is enabled to reliably grasp the sense of distance related to the manipulation.

In addition, the information processing device 100 selects the first threshold to be used for the display control of the first FB image from the plurality of first thresholds. Therefore, the process of controlling the first threshold value can be further simplified than in a case in which the single first threshold varies. Accordingly, it is possible to accelerate the process of controlling the first threshold, and thus it is possible to suppress a time lag between the manipulation by the user and the display of the first FB image.

### (Sixth modification example)

According to a sixth modification example of the embodiment of the present disclosure, the number of users performing manipulations may be plural. Specifically, the control unit 108 performs display control of the first FB image based on distance information on each of manipulators manipulated by the plurality of users. For example, the recognition unit 104 recognizes the plurality of users performing manipulations in manipulation regions and recognizes each manipulator manipulated by each user. The distance information generation unit 106 generates distance information of each of the recognized manipulators. The control unit 108 causes the projection device 300 to project each first FB image on the basis of whether the value of the generated distance information is equal to or greater than the first threshold with regard to each manipulator.

In addition, the control unit 108 causes the display device to display each first FB image and each manipulator image in accordance with each manipulator related to the user. Specifically, each first FB image in an identification aspect in accordance with each user is displayed. For example, the first FB image with a color, a pattern, a shape, or a figure in accordance with each user is projected. Further, the identification aspect of the first FB image may be decided on the basis of information regarding the recognized user. For example, the color of the first FB image may be decided from a color or the like of a cloth which the recognized user wears.

In addition, the manipulator image with the identification aspect in accordance with each user is displayed. For example, the control unit 108 acquires an image of each of the manipulators related to the plurality of users from a captured image and causes the projection device 300 to project each of the acquired images. Note that the manipulator image may be a generated image such as an illustration image, as described above. In this case, the generation image corresponding to each user is used.

Note that only in a case in which the manipulator image in accordance with the manipulator related to the user is not displayed, the first FB image in accordance with the manipulator related to the user may be displayed.

In this way, according to the sixth modification example, the information processing device 100 performs the display control of the first FB image based on the distance information on each of the manipulators manipulated by the plurality of users. Therefore, even in a case in which the plurality of users simultaneously perform manipulations in the manipulation regions provided in different places from the display region, the deterioration in the manipulability of each user can be prevented from deteriorating by presenting the sense of distance related to the manipulation to each user. In addition, by displaying the first FB image so that the first FB image can be individually identified by each user, each user can perform the manipulation without being confused.

### <2. Hardware configuration of information processing device according to embodiment of present disclosure>

The information processing devices 100 according to an embodiment of the present disclosure have been described above. The processing performed by the information processing device 100 is achieved by cooperatively operating software and hardware of the information processing device 100 described below.

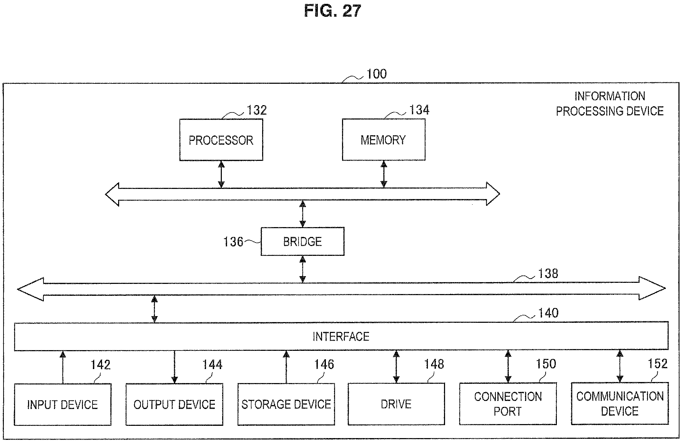

FIG. 27 is an explanatory diagram illustrating a hardware configuration of the information processing device 100 according to an embodiment of the present disclosure. As illustrated in FIG. 27, the information processing device 100 includes a processor 132, a memory 134, a bridge 136, a bus 138, an interface 140, an input device 142, an output device 144, a storage device 146, a drive 148, a connection port 150, and a communication device 152.

### (Processor)

The processor 132 functions as an arithmetic processing device, and achieves the functions of the speech recognition unit 104, a distance information generation unit 106, and the control unit 108 in the information processing device 100 by cooperatively operating with various programs. The processor 132 causes various logical functions of the information processing device 100 to operate, by using a control circuit to execute programs stored in the memory 134 or another storage medium. For example, the processor 132 may be a central processing unit (CPU), a graphics processing unit (GPU), a digital signal processor (DSP), or a system on chip (SoC).

### (Memory)

The memory 134 stores a program, a calculation parameter, and the like used by the processor 132. For example, the memory 134 includes a random access memory (RAM), and transiently stores programs used for executing the processor 132, parameters or the like that change as appropriate when executing the processor 132. In addition, the memory 134 includes a read only memory (ROM), and functions as the storage unit by using the RAM and the ROM. Note that, an external storage device may be used as a part of the memory 134 via the connection port 150 or the communication device 152.

Note that, the processor 132 and the memory 134 are connected to each other via an internal bus including a CPU bus or the like.

### (Bridge and bus)

The bridge 136 connects buses. Specifically, the bridge 136 connects the internal bus and the bus 138. The internal bus is connected to the processor 132 and the memory 134. The bus 138 is connected to the interface 140.

### (Input device)

The input device 142 is used by a user for operating the information processing device 100 or inputting information to the information processing device 100. For example, the input device 142 includes an input means to which the user inputs information, and an input control circuit that generates an input signal on the basis of the user input and outputs the generated input signal to the processor 132. Note that, the input means may be a mouse, a keyboard, a touchscreen, a switch, a lever, a microphone, or the like. By operating the input unit 142, the user of the information processing device 100 can input various kinds of data into the information processing device 100 and instruct the information processing device 100 to perform a processing operation.

### (Output device)

The display device 144 is used to notify a user of information. For example, the output device 144 may be a device such as a liquid crystal display (LCD) device, an organic light emitting diode (OLED) device, a projector, a speaker, or a headphone, or may be a module configured to output information to such a device.

Note that, the input device 142 or the output device 144 may include an input/output device. For example, the input/output device may be a touchscreen.

### (Storage device)

The storage device 146 is a data storage device. The storage device 146 may include a storage medium, a recording device that records data on the storage medium, a reading device that reads data from the storage medium, a deletion device that deletes data recorded on the storage medium, and the like. The storage device 146 stores various kinds of data or a program to be executed by the CPU 132.

### (Drive)

The drive 148 is a reader/writer for a storage medium, and is incorporated in or externally attached to the information processing device 100. The drive 148 reads information stored in a removable storage medium that is mounted, such as a magnetic disk, an optical disc, a magneto-optical disk, or semiconductor memory, and outputs the information to the memory 134. The drive 148 is also capable of writing information to the removable storage medium.

### (Connection port)

The connection port 150 is a port used to directly connect apparatuses to the information processing device 100. For example, the connection port 150 may be a USB (Universal Serial Bus) port, an IEEE1394 port, or a SCSI (Small Computer System Interface) port. In addition, the connection port 150 may be an RS-232C port, an optical audio terminal, an HDMI (registered trademark) (High-Definition Multimedia Interface) port, or the like. Data may be exchanged between the information processing device 100 and an external apparatus by connecting the external apparatus to the connection port 150.

### (Communication device)

The communication device 152 mediates communication between the information processing device 100 and an external device, and functions as the communication unit 102. Specifically, the communication device 152 establishes communication in accordance with a wireless communication scheme or a wired communication scheme. For example, the communication device 152 establishes wireless communication in accordance with a cellular communication scheme such as Wideband Code Division Multiple Access (W-CDMA) (registered trademark), WiMAX (registered trademark), Long-Term Evolution (LTE), or LTE-A. Note that, the communication device 152 may establish wireless communication in accordance with any wireless communication scheme like a short-range wireless communication such as Bluetooth (registered trademark), near-field communication (NFC), wireless USB, or TransferJet (registered trademark), or a wireless local area network (LAN) such as Wi-Fi (registered trademark). In addition, the communication device 152 may establish wired communication such as signal line communication or wired LAN communication.

Note that, the information processing device 100 does not have to include a part of the structural elements described with reference to FIG. 27. In addition, the information processing device 100 may include any additional structural element. In addition, it is possible to provide a one-chip information processing module in which a part or all structural elements described with reference to FIG. 27 are integrated.

### <3. Conclusion>

As described above, according to the embodiment of the present disclosure, the reference of a distance between the position of a manipulator and a position at which an input of a manipulation by the manipulator is recognized (hereinafter also referred to a sense of distance related to the manipulation) can be presented to a user. Therefore, the user can intuitively manipulate the manipulator while viewing the display region. Accordingly, it is possible to suppress deterioration in manipulability in a case in which the display region and the manipulation region are different. In particular, since it is more difficult for the user to grasp the sense of distance of a manipulation in a depth direction to the user in a 3-dimensional space than a manipulation in different directions (for example, vertical and horizontal directions), the information processing device 100 is beneficial. In addition, since an intuitive manipulation is possible, it is possible to accelerate a skill of an input manipulation.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, in the foregoing embodiment, the example in which the distance information is information regarding a distance in the depth direction to the user has been mainly described, but the present technology is not limited to the example. For example, the distance information may be one direction among the vertical and horizontal directions to the user or another specific direction.

In addition, the foregoing embodiment, the example in which the measurement device 200 is a depth sensor has been mainly described, but the measurement device 200 may be a visible-light imaging device, a laser ranging sensor, an ultrasonic sensor, or the like.

In addition, the foregoing embodiment, the example in which a virtual object such as the first FB image is projected by the projection device 300 has been mainly described, but the virtual object may be displayed by another display device in which a manipulation region and a display region are different. For example, the virtual object may be displayed by a head-up display (HUD) in which light of an external world image is penetrated and an image is displayed on a display unit or image light related to an image is projected to the eyes of a user, a head mount display (HMD) in which a captured external world image and an image are displayed, or the like.

In addition, in the foregoing embodiment, the example in which the manipulation region and the input recognition region are recognized by the recognition unit 104 has been described, but the manipulation region and the input recognition region may be acquired in accordance with another method. For example, information such as positions, areas, or the like of the manipulation region and the input recognition region may be stored in advance in the information processing device 100 or may be acquired from an external device through communication. In addition, the manipulation region and the input recognition region may be fixed.

In addition, the information processing system according to the embodiment of the present disclosure may be a client-server type of system or a cloud service type of system. For example, the information processing device 100 may be a server installed in a different place from the places in which the measurement device 200 and the projection device 300 are installed.

Further, the effects described in this specification are merely illustrative or exemplified effects, and are not limitative. That is, with or in the place of the above effects, the technology according to the present disclosure may achieve other effects that are clear to those skilled in the art from the description of this specification.

Further, not only a process in which steps shown in the flowcharts of the above embodiments are performed in a time-series manner in accordance with a described sequence but also a process in which the steps are not necessarily processed in a time-series manner but are executed in parallel or individually is included. Also, it is self-evident that even steps processed in a time-series manner can be appropriately changed in sequence depending on circumstances.

In addition, a computer program for causing hardware built in the information processing device 100 to exhibit functions equivalent to those of the above-described respective logical elements of the information processing device 100 can also be produced. Furthermore, a storage medium in which the computer program is stored is also provided.

Additionally, the present technology may also be configured as below.
(1) An information processing device including:
   an input unit configured to obtain distance information changed in accordance with a distance between a manipulator recognized in a different manipulation region from a display region in which a virtual object is viewed and an input recognition region in which an input by the manipulator in the manipulation region is recognized; and
   an output control unit configured to control an output related to the virtual object on a basis of the distance information.
(2) The information processing device according to (1), in which the output includes display of at least one first virtual object.
(3) The information processing device according to (2), in which the output control unit controls an aspect of the first virtual object related to a display range of the first virtual object on the basis of the distance information.
(4) The information processing device according to (3), in which the aspect of the first virtual object includes a size or a shape of the first virtual object.
(5) The information processing device according to any one of (2) to (4), in which the output control unit controls a positional relation between the plurality of first virtual objects on the basis of the distance information.
(6) The information processing device according to any one of (2) to (5), in which the output control unit controls a virtual effect on the first virtual object on the basis of the distance information.
(7) The information processing device according to (6), in which the control of the virtual effect on the first virtual object includes control of transparency, gradation, or a color of the first virtual object.
(8) The information processing device according to any one of (2) to (7), in which the output control unit controls display density of the first virtual object on the basis of the distance information.
(9) The information processing device according to any one of (2) to (8), in which the first virtual object includes a virtual object with a shape corresponding to the manipulator.
(10) The information processing device according to any one of (2) to (9), in which the first virtual object includes a virtual object expressing a value of the distance information.
(11) The information processing device according to any one of (2) to (10),
   in which the output control unit further controls display of a second virtual object corresponding to the manipulator, and
   the first virtual object includes a virtual object displayed on a basis of the second virtual object.
(12) The information processing device according to any one of (2) to (11),
   in which the display region includes a region including a manipulation target of the manipulator, and
   the output control unit further controls the display of the first virtual object on a basis of information regarding the manipulation target.
(13) The information processing device according to any one of (2) to (12), in which the output control unit further controls the display of the first virtual object in accordance with a number of the manipulators.
(14) The information processing device according to any one of (2) to (13), in which the output control unit further controls the display of the first virtual object on a basis of information regarding a user manipulating the manipulator.
(15) The information processing device according to any one of (2) to (14), in which the output control unit controls display or non-display of the first virtual object on a basis of a threshold of the distance information.
(16) The information processing device according to (15), in which the output control unit controls the threshold on the basis of the distance information.
(17) The information processing device according to (15) or (16), in which the output control unit controls the threshold on a basis of information regarding the manipulator or information regarding a user manipulating the manipulator.
(18) The information processing device according to any one of (2) to (17), in which the output control unit further controls display of a third virtual object in accordance with a manipulation target of the manipulator on a basis of recognition of an input by the manipulator.
(19) An information processing method including, by a processor:
   obtaining distance information changed in accordance with a distance between a manipulator recognized in a different manipulation region from a display region in which a virtual object is viewed and an input recognition region in which an input by the manipulator in the manipulation region is recognized; and
   controlling an output related to the virtual object on a basis of the distance information.
(20) A program causing a computer to realize:
   an input function of obtaining distance information changed in accordance with a distance between a manipulator recognized in a different manipulation region from a display region in which a virtual object is viewed and an input recognition region in which an input by the manipulator in the manipulation region is recognized; and
   an output control function of controlling an output related to the virtual object on a basis of the distance information.

### Reference Signs List

- 100: information processing device
- 102: communication unit
- 104: recognition unit
- 106: distance information generation unit
- 108: control unit
- 200: measurement device
- 300: projection device

## Claims

1. An information processing device comprising:
an input unit configured to obtain distance information changed in accordance with a distance between a manipulator recognized in a different manipulation region from a display region in which a virtual object is viewed and an input recognition region in which an input by the manipulator in the manipulation region is recognized; and
an output control unit configured to control an output related to the virtual object on a basis of the distance information.

2. The information processing device according to claim 1, wherein the output includes display of at least one first virtual object.

3. The information processing device according to claim 2, wherein the output control unit controls an aspect of the first virtual object related to a display range of the first virtual object on the basis of the distance information.

4. The information processing device according to claim 3, wherein the aspect of the first virtual object includes a size or a shape of the first virtual object.

5. The information processing device according to claim 2, wherein the output control unit controls a positional relation between the plurality of first virtual objects on the basis of the distance information.

6. The information processing device according to claim 2, wherein the output control unit controls a virtual effect on the first virtual object on the basis of the distance information.

7. The information processing device according to claim 6, wherein the control of the virtual effect on the first virtual object includes control of transparency, gradation, or a color of the first virtual object.

8. The information processing device according to claim 2, wherein the output control unit controls display density of the first virtual object on the basis of the distance information.

9. The information processing device according to claim 2, wherein the first virtual object includes a virtual object with a shape corresponding to the manipulator.

10. The information processing device according to claim 2, wherein the first virtual object includes a virtual object expressing a value of the distance information.

11. The information processing device according to claim 2,
wherein the output control unit further controls display of a second virtual object corresponding to the manipulator, and
the first virtual object includes a virtual object displayed on a basis of the second virtual object.

12. The information processing device according to claim 2,
wherein the display region includes a region including a manipulation target of the manipulator, and
the output control unit further controls the display of the first virtual object on a basis of information regarding the manipulation target.

13. The information processing device according to claim 2, wherein the output control unit further controls the display of the first virtual object in accordance with a number of the manipulators.

14. The information processing device according to claim 2, wherein the output control unit further controls the display of the first virtual object on a basis of information regarding a user manipulating the manipulator.

15. The information processing device according to claim 2, wherein the output control unit controls display or non-display of the first virtual object on a basis of a threshold of the distance information.

16. The information processing device according to claim 15, wherein the output control unit controls the threshold on the basis of the distance information.

17. The information processing device according to claim 15, wherein the output control unit controls the threshold on a basis of information regarding the manipulator or information regarding a user manipulating the manipulator.

18. The information processing device according to claim 2, wherein the output control unit further controls display of a third virtual object in accordance with a manipulation target of the manipulator on a basis of recognition of an input by the manipulator.

19. An information processing method comprising, by a processor:
obtaining distance information changed in accordance with a distance between a manipulator recognized in a different manipulation region from a display region in which a virtual object is viewed and an input recognition region in which an input by the manipulator in the manipulation region is recognized; and
controlling an output related to the virtual object on a basis of the distance information.

20. A program causing a computer to realize:
an input function of obtaining distance information changed in accordance with a distance between a manipulator recognized in a different manipulation region from a display region in which a virtual object is viewed and an input recognition region in which an input by the manipulator in the manipulation region is recognized; and
an output control function of controlling an output related to the virtual object on a basis of the distance information.
